(19) Europäisches Patentamt
European Patent Office
Office européen des brevets

(11) **EP 4 435 876 A1**

(12) **EUROPEAN PATENT APPLICATION**

(43) Date of publication:
**25.09.2024 Bulletin 2024/39**

(21) Application number: **23194668.2**

(22) Date of filing: **31.08.2023**

(51) International Patent Classification (IPC):
**H01M 4/04** *(2006.01)* **H01M 4/62** *(2006.01)*
**H01M 10/0525** *(2010.01)* **H01M 4/131** *(2010.01)*
**H01M 4/1391** *(2010.01)*

(52) Cooperative Patent Classification (CPC):
**H01M 4/0404; H01M 4/131; H01M 4/1391;**
**H01M 4/622; H01M 4/623; H01M 10/0525**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.03.2023 JP 2023046714**

(71) Applicant: **KABUSHIKI KAISHA TOSHIBA**
**Minato-ku**
**Tokyo 105-0023 (JP)**

(72) Inventors:
• **MURATA, Yoshiaki**
**Tokyo, 105-0023 (JP)**
• **HOSHINA, Keigo**
**Tokyo, 105-0023 (JP)**
• **TAKAMI, Norio**
**Tokyo, 105-0023 (JP)**

(74) Representative: **Marks & Clerk LLP**
**15 Fetter Lane**
**London EC4A 1BW (GB)**

(54) **SECONDARY BATTERY, BATTERY PACK, VEHICLE, AND STATIONARY POWER SUPPLY**

(57) In general, according to an approach, a secondary battery (100) is provided. The secondary battery (100) includes an aqueous electrolyte, a positive electrode (5), and a negative electrode (3). At least one of the positive electrode (5) or the negative electrode (3) includes a first binder. The first binder includes a fluorine-based resin and an acrylic resin.

FIG. 1

EP 4 435 876 A1

**Description**

FIELD

This disclosure relates generally to a secondary battery, a battery pack, a vehicle, and a stationary power supply.

BACKGROUND

A nonaqueous electrolyte battery using a carbon material or a lithium titanium oxide as a negative electrode active material and a layered oxide containing nickel, cobalt, manganese, and the like as a positive electrode active material, particularly a lithium secondary battery, has already been put to practical use as a power source in a wide range of fields. The form of such a nonaqueous electrolyte battery ranges from a small battery for various electronic devices to a large battery for electric automobiles.

Studies have been made on formation of an electrolytic solution as an aqueous solution. In an aqueous electrolytic solution, a potential range in which charge and discharge of a battery are performed must be kept within a potential range in which no electrolysis reaction of water contained as a solvent occurs. For example, electrolysis of water can be avoided by using a lithium manganese oxide as the positive electrode active material and a lithium vanadium oxide as the negative electrode active material. The combination of the materials provides an electromotive force of about 1 to 1.5 V, but is difficult to provide a sufficient energy density as a battery.

In a case where a lithium manganese oxide is used as the positive electrode active material and a lithium titanium oxide such as $LiTi_2O_4$ or $Li_4Ti_5O_{12}$ is used as the negative electrode active material, an electromotive force of about 2.6 V to 2.7 V is theoretically obtained, and an attractive battery can be achieved also from the viewpoint of energy density. A nonaqueous lithium secondary battery employing such a combination of positive and negative electrode materials achieves excellent life performance, and such a battery has already been put to practical use. However, in an aqueous electrolytic solution, lithium insertion/extraction potential of the lithium titanium oxide is about 1.5 V (vs. Li/Li$^+$) based on lithium potential, and thus electrolysis of water is likely to occur. On the other hand, there is a problem that gas is generated due to oxidation of an anion in the aqueous solution also in the lithium manganese oxide of the positive electrode, and satisfactory charge and discharge cannot be performed.

BRIEF DESCRIPTION OF THE DRAWINGS

FIG. 1 is a cross-sectional view schematically illustrating an example of a secondary battery according to an approach.
FIG. 2 is an enlarged cross-sectional view of a section A of the secondary battery illustrated in FIG. 1.
FIG. 3 is a partially cut-out perspective view schematically illustrating another example of the secondary battery according to the approach.
FIG. 4 is an enlarged cross-sectional view of a section B of the secondary battery illustrated in FIG. 3.
FIG. 5 is a perspective view schematically illustrating an example of a battery module according to an approach.
FIG. 6 is an exploded perspective view schematically illustrating an example of a battery pack according to an approach.
FIG. 7 is a block diagram illustrating an example of an electric circuit of the battery pack illustrated in FIG. 6.
FIG. 8 is a partially see-through diagram schematically illustrating an example of a vehicle according to an approach.
FIG. 9 is a diagram schematically illustrating an example of a control system related to an electric system in the vehicle according to the approach.
FIG. 10 is a block diagram showing an example of a system including a stationary power supply according to an approach.

DETAILED DESCRIPTION

In general, according to an approach, a secondary battery is provided. The secondary battery includes an aqueous electrolyte, a positive electrode, and a negative electrode. At least one of the positive electrode or the negative electrode includes a first binder. The first binder includes a fluorine-based resin and an acrylic resin.

According to another approach, a battery pack including the secondary battery according to the approach is provided.

According to another approach, a vehicle including the battery pack according to the approach is provided.

According to another approach, a stationary power supply including the battery pack of the approach is provided.

Hereinafter, approaches will be described with reference to the drawings as appropriate. The same reference signs are applied to common components throughout the approaches and overlapped explanations are thereby omitted. Each drawing is a schematic view for encouraging explanations of the approach and understanding thereof, and thus there are some details in which a shape, a size and a ratio are different from those in an actual device; they can however be appropriately design-changed, taking into account the following explanations and known technology.

(First approach)

In a secondary battery including an aqueous electrolyte, electrolysis of water in an aqueous electrolyte may occur as a side reaction. Therefore, the aqueous electrolyte may be deteriorated.

For example, electrolysis of water in a lithium ion secondary battery causes competition between insertion of lithium ions and generation of hydrogen in a negative electrode, and thus lithium ions extracted from a positive electrode may not contribute to a battery reaction. Upon generation of hydrogen in the negative electrode, lithium ions can be extracted from the negative electrode at the same time. Therefore, upon occurrence of electrolysis of water, lithium ions are consumed from both the negative electrode and the positive electrode, and thus the amount of lithium ions available for charge and discharge may be reduced. As a result, battery capacity may be deteriorated with a charge-discharge cycle.

In the side reaction, for example, a solid component can be generated as a decomposition product of the aqueous electrolyte. These solid components may be deposited, for example, on the electrode, and thus may cause an increase in resistance.

As a result of earnest research, the present inventors have realized the secondary battery according to a first approach.

According to a first approach, a secondary battery is provided. The secondary battery includes an aqueous electrolyte, a positive electrode, and a negative electrode. At least one of the positive electrode or the negative electrode includes a first binder. The first binder includes a fluorine-based resin and an acrylic resin.

The acrylic resin has a high covering property on active material particles. Therefore, contact between the active material in the electrode and water in the aqueous electrolyte can be suppressed.

The fluorine-based resin has high hydrophobicity. Therefore, contact between the active material in the electrode and water in the aqueous electrolyte can be suppressed, and thus side reactions can be suppressed. This contributes to improvement in cycle life performance.

Since the fluorine-based resin has high hydrophobicity, molecules of the fluorine-based resin are easily aggregated with each other. As a result, for example, the fluorine-based resin is easily fibrillated. The fibrillated fluorine-based resin may have a low covering property on a particle-shaped active material (active material particles). Therefore, it is difficult to improve the covering property of the fluorine-based resin singly on the active material particles.

Since the acrylic resin and the fluorine-based resin can be compatible with each other, they can be mixed and used as the first binder.

The first binder includes an acrylic resin having a high covering property on the active material particles and a fluorine-based resin having high hydrophobicity. Therefore, the first binder can ensure sufficient covering property and hydrophobicity for suppressing side reactions, even in an aqueous electrolyte battery in which electrolysis of water is likely to occur as compared with a nonaqueous electrolyte battery. As a result, the cycle life performance can be further improved.

Hereinafter, details of the secondary battery according to the approach will be further described.

In the secondary battery, at least one of the positive electrode or the negative electrode includes the first binder. The electrode can include a current collector and an active material-containing layer formed on the current collector. The active material-containing layer includes an active material and the first binder. The active material may be, for example, particle-shaped active material particles. The electrode can further include a film. The film can be referred to as a covering. The film can be included in the active material-containing layer.

The first binder can cover at least a part of surfaces of the active material particles. Therefore, since contact between the active material and an aqueous electrolyte can be suppressed, side reactions can be suppressed. This contributes to improvement in cycle life performance.

The first binder preferably satisfies $0.01 \leq A_F / (A_F + A_O + 2A_N) \leq 0.95$. In the formula, $A_O$ is an amount of an oxygen atom, $A_F$ is an amount of a fluorine atom, and $A_N$ is an amount of a nitrogen atom. $A_O + A_N > 0$ and $A_F > 0$.

The first binder may include an oxygen atom and a fluorine atom. The oxygen atom can be included, for example, in the acrylic resin in the first binder. The fluorine atom can be included, for example, in the fluorine-based resin in the first binder. The first binder may further include a nitrogen atom. The nitrogen atom can be included in, for example, the acrylic resin such as acrylonitrile.

In the first binder, the amount $A_O$ of the oxygen atom, the amount $A_F$ of the fluorine atom, and the amount $A_N$ of the nitrogen atom included in the first binder preferably satisfy $0.01 \leq A_F / (A_F + A_O + 2A_N) \leq 0.95$. As long as $A_O + A_N > 0$, $A_O$ or $A_N$ may be 0. That is, the first binder may not include either one of the oxygen atom and the nitrogen atom.

In a case where a proportion of the acrylic resin in the first binder is large or a proportion of the fluorine-based

EP 4 435 876 A1

resin is small, the $A_F/(A_F+A_O+2A_N)$ value may decrease. As the proportion of the acrylic resin to the first binder increases or the proportion of the fluorine-based resin decreases, a coverage rate of the first binder on the active material particles tends to be capable of being increased. Therefore, $A_F/(A_F+A_O+2A_N)$ is preferably 0.95 or less, and particularly preferably 0.8 or less.

In a case where the proportion of the acrylic resin in the first binder is small or the proportion of the fluorine-based resin is large, the $A_F/(A_F+A_O+2A_N)$ value may increase. As the proportion of the acrylic resin to the first binder is lower or the proportion of the fluorine-based resin is higher, there is a tendency that the hydrophobicity can be increased and that the electrode can be made flexible. Therefore, $A_F/(A_F+A_O+2A_N)$ is preferably 0.01 or more, more preferably 0.05 or more, particularly preferably 0.5 or more, and still more preferably 0.6 or more. In the first binder, the amount Ao of the oxygen atom, the amount $A_F$ of the fluorine atom, and the amount $A_N$ of the nitrogen atom included in the first binder preferably satisfy $0.5 \leq A_F/(A_F+A_O+2A_N) \leq 0.8$.

In a case where $0.01 \leq A_F/(A_F+A_O+2A_N) \leq 0.95$, an atom number ratio in a case where the proportion of the acrylic resin to the first binder is 5 mass% or more and 70 mass% or less can be satisfied, which is preferable. In a case where the proportion of the acrylic resin to the first binder is 5 mass% or more, the coverage rate of the first binder on the active material particles can be increased. In a case where the proportion is 70 mass% or less, sufficient hydrophobicity can be secured, and flexibility of the electrode can be maintained. A flexible electrode can be suppressed in cracking due to expansion and contraction of the electrode associated with the charge-discharge cycle. Therefore, it is possible to suppress an adverse effect of an increase in resistance. The proportion of the acrylic resin to the first binder is more preferably in a range of 15 mass% or more and 45 mass% or less.

The acrylic resin may be a polymer including at least one selected from the group consisting of an acrylic acid ester, a methacrylic acid ester, and acrylonitrile. The at least one selected from the group consisting of an acrylic acid ester, a methacrylic acid ester, and acrylonitrile may be included, for example, as a monomer in the polymer. The type of the monomer included in the polymer can be one or two or more. The polymer may be a polymer including one type of monomer, or may be a copolymer including two or more types of monomers. Specific examples of the polymer can include an acrylic acid ester polymer, a methacrylic acid ester polymer, and an acrylonitrile polymer, and copolymers thereof. The type of the acrylic resin can be one or two or more.

Among the above resins, it is preferable that the acrylic resin particularly includes a methacrylic acid ester polymer from the viewpoint of compatibility with the fluorine-based resin.

An infrared absorption spectrum of the surface of the electrode included in the secondary battery according to the present approach in Fourier transform infrared spectroscopy (FT-IR) measurement may have an absorption peak within a range of 1710 cm$^{-1}$ or more and 1740 cm$^{-1}$ or less, and may have an absorption peak within a range of 1120 cm$^{-1}$ or more and 1160 cm$^{-1}$ or less.

The absorption peak in the range of 1710 cm$^{-1}$ or more and 1740 cm$^{-1}$ or less in the infrared absorption spectrum is attributed to a C=O bond. The absorption peak in the range of 1120 cm$^{-1}$ or more and 1160 cm$^{-1}$ or less is attributed to a C-O bond. These bonds may be attributed to a carboxylic acid ester. Examples of the carboxylic acid ester include the acrylic resin. The infrared absorption spectrum of the surface of the electrode including the acrylic resin may have an absorption peak as described above.

The infrared absorption spectrum of the surface of the electrode included in the secondary battery according to the present approach may have an absorption peak within a range of 2800 cm$^{-1}$ or more and 3000 cm$^{-1}$ or less, in addition to the absorption peak that the surface of the electrode including the acrylic resin may have, and may also have a low absorbance over a range of 1800 cm$^{-1}$ or more and 2500 cm$^{-1}$ or less. The infrared absorption spectrum of the surface of the electrode including the polymer including an acrylic acid ester or a methacrylic acid ester has the above characteristics.

The infrared absorption spectrum of the surface of the electrode including the polymer including an acrylic acid ester or a methacrylic acid ester may satisfy, for example, $A_{2900}/A_{2000} \geq 2$, $A_{1725}/A_{2000} \geq 4$, and $A_{1145}/A_{2000} \geq 4$. Here, $A_\lambda$ refers to absorbance at $\lambda$ cm$^{-1}$ in the infrared absorption spectrum.

The infrared absorption spectrum of the surface of the electrode included in the secondary battery according to the present approach may have a low absorbance over the range of 1800 cm$^{-1}$ or more and 2500 cm$^{-1}$ or less, and thus the peak can be defined, for example, as follows, in the infrared absorption spectrum. It can be said that the infrared absorption spectrum satisfying $A_{2900}/A_{2000} \geq 2$ has a peak within a range of 2800 cm$^{-1}$ or more and 3000 cm$^{-1}$ or less. It can be said that the infrared absorption spectrum satisfying $A_{1725}/A_{2000} \geq 4$ has a peak within a range of 1710 cm$^{-1}$ or more and 1740 cm$^{-1}$ or less. It can be said that the infrared absorption spectrum satisfying $A_{1145}/A_{2000} \geq 4$ has a peak within a range of 1120 cm$^{-1}$ or more and 1160 cm$^{-1}$ or less.

The infrared absorption spectrum of the surface of the electrode included in the secondary battery according to the present approach may have an absorption peak within a range of 2240 cm$^{-1}$ or more and 2260 cm$^{-1}$ or less, in addition to the absorption peak that the surface of the electrode including the acrylic resin may have. This absorption peak is attributed to a C≡N bond. The C≡N bond can be attributed to, for example, acrylonitrile. Furthermore, the absorbance may be low over a range of 1800 cm$^{-1}$ or more and 2200 cm$^{-1}$ or less. The infrared absorption spectrum of

4

the surface of the electrode including the polymer including acrylonitrile has the above characteristics.

The infrared absorption spectrum of the surface of the electrode including the polymer including acrylonitrile may satisfy, for example, $A_{2250}/A_{2000} \geq 4$.

Similarly as described above, it can be said that the infrared absorption spectrum satisfying $A_{2250}/A_{2000} \geq 4$ has a peak within the range of 1800 cm$^{-1}$ or more and 2200 cm$^{-1}$ or less.

The proportion of the fluorine-based resin to the first binder is preferably in a range of 30 mass% or more and 95 mass% or less. In a case where the proportion is 30 mass% or more, sufficient hydrophobicity can be secured, and flexibility of the electrode can be maintained, thereby making it possible to suppress an adverse effect of an increase in resistance. In a case where the proportion is 95 mass% or less, the coverage rate of the first binder on the active material particles can be increased. The proportion of the fluorine-based resin is more preferably in a range of 55 mass% or more and 85 mass% or less.

The fluorine-based resin may be a polymer including vinylidene fluoride. The vinylidene fluoride may be included, for example, as a monomer in the polymer. Specifically, the fluorine-based resin may be polyvinylidene fluoride (PVDF), or a copolymer including vinylidene fluoride and another monomer.

An X-ray photoelectron spectroscopic (XPS) spectrum of the surface of the electrode included in the secondary battery according to the present approach may have a peak within a range of 292 eV or more and 294 eV or less. The peak appearing within this range is an absorption peak attributed to a C-F bond. The C-F bond can be attributed to the fluorine-based resin. The XPS spectrum of the surface of the electrode including the fluorine-based resin may have the above peak.

Preferably, the electrode further includes a film. The form of the film is not particularly limited. The film (or the covering) may be formed on the surface of the electrode, or may be formed inside the active material-containing layer. These cases are collectively referred to as a case where the electrode includes a film. The film may be exposed to the electrode surface. The electrode surface refers to a principal surface on a side not in contact with the current collector out of principal surfaces of the active material-containing layer. The film may be formed, for example, on an outer side of the first binder at least partially covering the surfaces of the active material particles. The film may cover a portion of the surfaces of the active material particles, which is not covered with the first binder. Therefore, when the electrode further includes a film in addition to the first binder, the contact between the active material and the aqueous electrolyte can be further suppressed, so that side reactions can be suppressed.

Therefore, in a case where the electrode includes a film, the use of the active material particles which are likely to cause side reactions in combination with the aqueous electrolyte more easily suppresses side reactions. Examples of the active material particles which are likely to cause side reactions include active material particles having a small particle size. The active material particles having a small particle size have a large surface area. Therefore, although output performance can be improved, side reactions tend to easily occur. In a case where the electrode includes a film, it is possible to employ active material particles which are likely to cause such side reactions, and thus to achieve both suppression of side reactions and improvement in output performance.

The film includes at least one selected from the group consisting of cyanates, sulfuric acid salts, metal zinc, metal tin, metal lead, lithium fluoride, lithium oxide, zinc oxide, and zinc hydroxide. Examples of the cyanate include cyanate compounds and isocyanate compounds. Examples of the isocyanate compound include lithium isocyanate. Examples of the sulfuric acid salt include sulfuric acid salts and sulfurous acid salts. Specific examples of the sulfuric acid salt and the sulfurous acid salt include lithium sulfate and lithium sulfite, respectively.

The cyanate and sulfuric acid salt can be stably present in the aqueous electrolyte battery. In addition, they have excellent lithium ion conductivity. Therefore, a high side reaction suppressing effect can be obtained, and resistance can be kept low.

The XPS spectrum for the surface of the electrode included in the secondary battery according to the present approach may have a peak within a range of 398 eV or more and 402 eV or less. The XPS spectrum for the surface of the electrode including the film (or the covering) containing a cyanate has the above characteristics.

The XPS spectrum for the surface of the electrode included in the secondary battery according to the present approach may have a peak within a range of 168 eV or more and 173 eV or less. The XPS spectrum for the surface of the electrode including the film (or the covering) containing a sulfuric acid salt has the above characteristics.

Metal zinc, metal tin, metal lead, lithium fluoride, lithium oxide, zinc oxide, and zinc hydroxide have a high hydrogen overvoltage. Therefore, the electrode including the film (or the covering) containing at least one of the above substances can be suppressed in electrolysis of water. Therefore, hydrogen generation can be suppressed, and insertion and extraction of lithium ions in the negative electrode can be smoothed. Therefore, the cycle life performance of the secondary battery can be improved. The film (or the covering) including at least one selected from the group consisting of metal zinc, metal tin, metal lead, lithium fluoride, lithium oxide, zinc oxide, and zinc hydroxide is more preferably formed on the negative electrode out of the positive electrode and the negative electrode.

The XPS spectrum of the surface of the electrode included in the secondary battery according to the present approach may have a peak within a range of 1020.6 eV or more and 1023.2 eV or less. The XPS spectrum for the surface of the electrode including the film (or the covering) containing at least one selected from the group consisting of metal zinc, zinc oxide, and zinc hydroxide has the above characteristics.

The film (or the covering) containing metal zinc may simultaneously contain zinc oxide or zinc hydroxide. Zinc oxide can be generated, for example, by oxidizing a surface of metal zinc.

Metal zinc, zinc oxide, and zinc hydroxide can be distinguished from each other by fitting of a peak shape within a range of 1020.7 eV or more and 1023.2 eV or less. For example, in the XPS spectrum of the electrode surface for the surface of the electrode including the film (or the covering) containing metal zinc and zinc oxide, a peak can be detected in a range of 1020.7 eV or more and 1021.3 eV or less and a peak can be detected in a range of 1021.8 eV or more and 1022.6 eV or less, by fitting of the peak shape.

The peak within the range of 1020.7 eV or more and 1021.3 eV or less can be attributed to, for example, metal zinc. The peak within the range of 1021.8 eV or more and 1022.6 eV or less can be attributed to, for example, zinc oxide.

In the XPS spectrum of the electrode surface for the surface of the electrode including the film (or the covering) containing zinc hydroxide, a peak can be detected in a range of 1022.4 eV or more and 1023.2 eV or less by fitting of the peak shape.

The XPS spectrum of the surface of the electrode included in the secondary battery according to the present approach may have a peak within a range of 484.4 eV or more and 485.3 eV or less. The XPS spectrum for the surface of the electrode including the film (or the covering) containing metal tin has the above characteristics.

The XPS spectrum of the surface of the electrode included in the secondary battery according to the present approach may have a peak within a range of 136.2 eV or more and 137.1 eV or less. The XPS spectrum for the surface of the electrode including the film (or the covering) containing metal lead has the above characteristics.

The XPS spectrum of the surface of the electrode included in the secondary battery according to the present approach may have a peak within a range of 684.7 eV or more and 685.4 eV or less. The XPS spectrum for the surface of the electrode including the film (or the covering) containing lithium fluoride has the above characteristics.

The XPS spectrum of the surface of the electrode included in the secondary battery according to the present approach may have a peak within a range of 55.2 eV or more and 55.8 eV or less. The XPS spectrum for the surface of the electrode including the film (or the covering) containing lithium oxide has the above characteristics.

Hereinafter, details of the secondary battery according to the approach will be described in detail.

The secondary battery can be, for example, a lithium secondary battery (lithium ion secondary battery) using lithium ions as carrier ions. The secondary battery includes an aqueous electrolyte secondary battery including an aqueous electrolyte (for example, aqueous solution electrolyte). That is, the secondary battery may be an aqueous electrolyte lithium ion secondary battery.

The secondary battery may further include a separator provided between the positive electrode and the negative electrode.

In the secondary battery, the negative electrode, the positive electrode, and the separator may configure an electrode group. The aqueous electrolyte may be held in the electrode group.

The secondary battery may further include a container member capable of accommodating the electrode group and the aqueous electrolyte. Also, the secondary battery may include a negative electrode terminal electrically connected to the negative electrode and a positive electrode terminal electrically connected to the positive electrode.

Hereinafter, the negative electrode, positive electrode, separator, aqueous electrolyte, container member, negative electrode terminal, and positive electrode terminal will be described in detail. Of the descriptions of the negative electrode and the positive electrode, portions that overlap with the description of the electrode given above are omitted.

1) Negative electrode

The negative electrode may include a negative electrode current collector and a negative electrode active material-containing layer. The negative electrode active material-containing layer can be formed on one side or both sides of the negative electrode current collector. The negative electrode active material-containing layer may include a negative electrode active material, and optionally an electro-conductive agent and a negative electrode binder. The negative electrode may further include a film. The film can be referred to as a covering.

The negative electrode active material-containing layer may include the first binder described above as the negative electrode binder. That is, the negative electrode may be the electrode described above. In a case where the negative electrode is the electrode described above, the negative electrode current collector, the negative electrode active material-containing layer, the negative electrode active material, and the negative electrode binder may be the current collector, the active material-containing layer, the active material, and the first binder described above, respectively.

In a case where the positive electrode to be combined with the negative electrode includes the first binder, the negative electrode may not include the first binder.

Examples of the negative electrode active material include lithium titanate having a ramsdellite structure (e.g.,

$Li_{2+y}Ti_3O_7$, $0 \leq y \leq 3$), lithium titanate having a spinel structure (e.g. , $Li_{4+x}Ti_5O_{12}$, $0 \leq x \leq 3$), titanium dioxide ($TiO_2$), anatase titanium dioxide, rutile titanium dioxide, niobium pentoxide ($Nb_2O_5$), hollandite titanium composite oxide, orthorhombic titanium composite oxide, and monoclinic niobium titanium oxide.

Examples of the orthorhombic titanium-containing composite oxide as described above include a compound represented by $Li_{2+a}M^I_{2-b}Ti_{6-c}M^{II}_dO_{14+o}$. Here, $M^I$ is at least one selected from the group consisting of Sr, Ba, Ca, Mg, Na, Cs, Rb and K. $M^{II}$ is at least one selected from the group consisting of Zr, Sn, V, Nb, Ta, Mo, W, Y, Fe, Co, Cr, Mn, Ni and Al. The respective subscripts in the composition formula are as follows: $0 \leq a \leq 6$, $0 \leq b < 2$, $0 \leq c < 6$, $0 \leq d < 6$, and $-0.5 \leq \sigma \leq 0.5$: A specific example of the orthorhombic titanium-containing composite oxide is $Li_{2+a}Na_2Ti_6O_{14}$ ($0 \leq a \leq 6$).

An example of the monoclinic niobium titanium oxide is a compound represented by $Li_xTi_{1-y}M1_yNb_{2-z}M2_zO_{7+\delta}$. Here, M1 is at least one selected from the group consisting of Zr, Si, and Sn. M2 is at least one selected from the group consisting of V, Ta, and Bi. The respective subscripts in the composition formula are as follows: $0 \leq x \leq 5$, $0 \leq y < 1$, $0 \leq z < 2$, and $-0.3 \leq \delta \leq 0.3$. A specific example of the monoclinic niobium titanium oxide is $Li_xNb_2TiO_7$ ($0 \leq x \leq 5$).

Another example of the monoclinic niobium titanium oxide is a compound represented by $Li_xTi_{1-y}M3_{y+z}Nb_{2-z}O_{7-\delta}$. Here, M3 is at least one selected from Mg, Fe, Ni, Co, W, Ta, and Mo. The respective subscripts in the composition formula are as follows: $0 \leq x \leq 5$, $0 \leq y < 1$, $0 \leq z < 2$, and $-0.3 \leq \delta \leq 0.3$.

The negative electrode active material may have, for example, a particle shape. The negative electrode active material may be in the form of primary particles, may be in the form of secondary particles in which primary particles are aggregated, or may be a mixture of primary particles and secondary particles.

An average particle size of the negative electrode active material particles is preferably 5 μm or less. The average particle size of the negative electrode active material particles is more preferably in a range of 0.5 um or more and 5 μm or less. The use of the negative electrode active material particles having an average particle size of 5 um or less can sufficiently reduce the resistance to in-solid diffusion of lithium ions, so that the output performance can be improved. In a case where the average particle size of the negative electrode active material particles is less than 0.5 um, it is necessary to add an excessive amount of resin in order to suppress a side reaction due to contact between the negative electrode active material particles and the aqueous electrolyte, which is disadvantageous from the viewpoint of an increase in resistance.

The electro-conductive agent is added to improve current collection performance and to suppress the contact resistance between the negative electrode active material and the negative electrode current collector. Examples of the electro-conductive agent include carbonaceous substances such as vapor grown carbon fiber (VGCF), carbon blacks such as acetylene black, graphite, carbon nanotubes, and carbon nanofibers. One of these may be used as the electro-conductive agent, or two or more may be used in combination as the electro-conductive agent. Alternatively, instead of using the electro-conductive agent, a carbon coat or an electronically conductive inorganic material coat may be applied to the surfaces of the negative electrode active material particles.

The negative electrode binder is blended in order to fill the gaps between the dispersed negative electrode active materials and to bind the negative electrode active material and the negative electrode current collector. The negative electrode binder can include the first binder described above. The negative electrode binder may include a binder other than the first binder. The negative electrode binder may only include the first binder described above, may be a mixture of the first binder and another binder, or may only include another binder. As such another binder, the above-described fluorine-based resin or acrylic resin may be used singly.

Examples of such another binder include polytetrafluoroethylene (PTFE), polyvinylidene fluoride (PVDF), fluorine rubber, styrene-butadiene rubber, polyacrylic acid compounds, imide compounds, carboxymethyl cellulose (CMC), and salts of CMC. One of these materials may be used as the negative electrode binder, or two or more of these materials may be combined and used as the negative electrode binder.

Blending proportions of the negative electrode active material, the electro-conductive agent and the negative electrode binder in the negative electrode active material-containing layer can be appropriately changed. For example, it is preferable to blend the negative electrode active material, the electro-conductive agent and the negative electrode binder in proportions of 68 mass% or more and 96 mass% or less, 2 mass% or more and 30 mass% or less, and 2 mass% or more and 30 mass% or less, respectively. The amount of the electro-conductive agent is set to 2 mass% or more, so that current collecting performance of the negative electrode active material-containing layer can be improved. Further, the amount of the negative electrode binder is set to 2 mass% or more, so that binding property between the negative electrode active material-containing layer and the current collector becomes sufficient, and excellent cycle performance can be expected. On the other hand, an amount of each of the electro-conductive agent and negative electrode binder is preferably 30 mass% or less, in view of increasing the capacity.

In a case where the negative electrode binder includes the first binder, the proportion of the first binder in the negative electrode binder is preferably 1 mass% or more. The proportion of the first binder in the negative electrode binder may be 100 mass%. The proportion of the first binder refers to the total proportion of the fluorine-based resin and the acrylic resin in the negative electrode binder.

Preferably, the negative electrode further includes a film. The form of the film is not particularly limited. The film may be formed on a surface of the negative electrode, or may be formed inside the negative electrode active material-containing layer. The film may be exposed to the negative electrode surface. The negative electrode surface refers to a principal surface on a side not in contact with the negative electrode current collector out of principal surfaces of the negative electrode active material-containing layer. The film may be formed, for example, on an outer side of the first binder covering at least a part of the surfaces of the negative electrode active material particles. The film may be formed, for example, on the first binder covering at least a part of the surfaces of the negative electrode active material particles. The film may cover, for example, a portion of the surfaces of the negative electrode active material particles, which is not covered with the negative electrode binder.

In a case where the negative electrode further includes a film in addition to the first binder, the contact between the negative electrode active material and the aqueous electrolyte can be further suppressed, so that side reactions can be suppressed, which is preferable.

Preferably, the negative electrode includes the first binder as the negative electrode binder, and the surface of the negative electrode includes at least one selected from the group consisting of metal zinc, metal tin, metal lead, lithium fluoride, lithium oxide, zinc oxide, and zinc hydroxide. The at least one selected from the group consisting of metal zinc, metal tin, metal lead, lithium fluoride, lithium oxide, zinc oxide, and zinc hydroxide may be included, for example, in the film.

A density of the negative electrode active material-containing layer (excluding the negative electrode current collector) is preferably from 1.8 g/cm$^3$ or more and 2.8 g/cm$^3$ or less. A negative electrode including the negative electrode active material-containing layer having a density within this range is excellent in energy density and aqueous electrolyte retention. The density of the negative electrode active material-containing layer is more preferably 2.1 g/cm$^3$ or more and 2.6 g/cm$^3$ or less.

There may be used for the negative electrode current collector, a material which is electrochemically stable at a potential at which lithium (Li) is inserted into and extracted from the negative electrode active material. For example, the negative electrode current collector is preferably made of copper, nickel, stainless steel or aluminum, or an aluminum alloy including one or more elements selected from Mg, Ti, Zn, Mn, Fe, Cu, and Si. A thickness of the negative electrode current collector is preferably 5 $\mu$m or more and 20 $\mu$m or less. The negative electrode current collector having such a thickness can achieve a balance between strength and weight reduction of the negative electrode.

Further, the negative electrode current collector may include a portion where the negative electrode active material-containing layer is not formed on the surface thereof. This portion can serve as a negative electrode current-collecting tab.

The negative electrode can be fabricated, for example, by the following method. First, a negative electrode active material, an electro-conductive agent, and a negative electrode binder are suspended in a solvent to prepare a slurry. The slurry is applied onto one side or both sides of a negative electrode current collector. Then, the applied slurry is dried to obtain a stack of a negative electrode active material-containing layer and the negative electrode current collector. Then, the stack is subjected to pressing. The negative electrode is fabricated in this manner.

Alternatively, the negative electrode may be fabricated by the following method. First, a negative electrode active material, an electro-conductive agent, and a negative electrode binder are mixed to obtain a mixture. Next, the mixture is formed into pellets. Then, the negative electrode can be obtained by disposing the pellets onto the negative electrode current collector.

In a case where the negative electrode includes a film, the film can be formed, for example, by directly forming a film on the negative electrode using a film precursor, or by adding a film precursor to an aqueous electrolyte. The film precursor can be referred to as a covering precursor. Examples of the film precursor can include materials including at least one selected from the group consisting of cyanates, sulfuric acid salts, amide compounds, organic sulfur compounds, a salt including at least one element selected from the group consisting of Zn, Sn, and Pb, metals including the above-described element, and metal oxides including the above-described element. The film precursor may be a material including a substance that forms the film by itself, or may be a material including a substance that generates the film by electrolysis or the like.

In a case where the film precursor (or the covering precursor) is added to the aqueous electrolyte, for example, the film (or the covering) can be formed by electrolyzing the film precursor (or the covering precursor) on the negative electrode at the time of initial charge. In this case, initial charge current is preferably less than 1 C (time discharge rate), and a temperature is preferably 25°C or higher.

Examples of a method of directly forming the film on the negative electrode include a method of forming the film by a solution method, a vapor deposition method, a spray method, or the like. Examples of the film precursor suitable for the method of directly forming the film on the negative electrode include materials including at least one selected from the group consisting of cyanates, sulfuric acid salts, metal zinc, metal tin, metal lead, lithium fluoride, lithium oxide, zinc oxide, and zinc hydroxide.

The solution method is a method in which the film can be formed, for example, by adding the film precursor (or the covering precursor) to an electrode slurry in a solution or solid state and drying the film precursor (or the covering precursor) at a predetermined temperature during electrode coating. The vapor deposition method is, for example, a method in which the film can be formed by coating the current collector with an electrode slurry and vapor-depositing the film precursor (or the covering precursor) to a predetermined thickness on the electrode after drying. As a vapor deposition technique, for example, a vacuum vapor deposition method or the like can be used. The spray method is, for example, a method in which the film can be formed by coating the current collector with an electrode slurry, wet-spraying a film precursor solution (or a covering precursor solution) to the electrode after drying, and drying the film precursor solution.

A method of adding the film precursor (or the covering precursor) to the aqueous electrolyte will be described later.

2) Positive electrode

The positive electrode may include a positive electrode current collector and a positive electrode active material-containing layer. The positive electrode active material-containing layer may be formed on one side or both sides of the positive electrode current collector. The positive electrode active material-containing layer may include a positive electrode active material, and optionally an electro-conductive agent and a positive electrode binder. The positive electrode may further include a film. The film can be referred to as a covering.

The positive electrode active material-containing layer may include the first binder described above as the positive electrode binder. That is, the positive electrode may be the electrode described above. In a case where the positive electrode is the electrode described above, the positive electrode current collector, the positive electrode active material-containing layer, the positive electrode active material, and the positive electrode binder may be the current collector, the active material-containing layer, the active material, and the first binder described above, respectively.

In a case where the negative electrode to be combined with the positive electrode includes the first binder, the positive electrode may not include the first binder.

As the positive electrode active material, for example, an oxide or a sulfide may be used. The positive electrode may include one type of compound singly as the positive electrode active material, or, alternatively, may include two or more types of compounds in combination. Examples of the oxide and sulfide include compounds capable of having Li and Li ions be inserted and extracted.

Examples of such compounds include manganese dioxide ($MnO_2$), iron oxides, copper oxides, nickel oxides, lithium manganese composite oxides (e.g., $Li_xMn_2O_4$ or $Li_xMnO_2$; $0<x\leq1$), lithium nickel composite oxides (e.g., $Li_xNiO_2$; $0<x\leq1$), lithium cobalt composite oxides (e.g., $Li_xCoO_2$; $0<x\leq1$), lithium nickel cobalt composite oxides (e.g., $Li_xNi_{1-y}Co_yO_2$; $0<x\leq1$, $0<y<1$), lithium manganese cobalt composite oxides (e.g., $Li_xMn_yCo_{1-y}O_2$; $0<x\leq1$, $0<y<1$), lithium manganese nickel composite oxides having a spinel structure (e.g., $Li_xMn_{2-y}Ni_yO_4$; $0<x\leq1$, $0<y<2$), lithium phosphorus oxides having an olivine structure (e.g., $Li_xFePO_4$; $0<x\leq1$, $Li_xFe_{1-y}Mn_yPO_4$; $0<x\leq1$, $0<y\leq1$, and $Li_xCoPO_4$; $0<x\leq1$), iron sulfate ($Fe_2(SO_4)_3$), vanadium oxides (e.g., $V_2O_5$), and lithium nickel cobalt manganese composite oxide ($Li_xNi_{1-y-z}Co_yMn_zO_2$; $0<x\leq1$, $0<y<1$, $0<z<1$, $y+z<1$).

Among the above, examples of compounds more preferable as the positive electrode active material include lithium manganese composite oxides having a spinel structure (e.g., $Li_xMn_2O_4$; $0<x\leq1$), lithium nickel composite oxides (e.g., $Li_xNiO_2$; $0<x\leq1$), lithium cobalt composite oxides (e.g., $Li_xCoO_2$: $0<x\leq1$), lithium nickel cobalt composite oxides (e.g., $Li_xNi_{1-y}Co_yO_2$; $0<x\leq1$, $0<y<1$), lithium manganese nickel composite oxides having a spinel structure (e.g., $Li_xMn_{2-y}Ni_yO_4$; $0<x\leq1$, $0<y<2$), lithium manganese cobalt composite oxide (e.g., $Li_xMn_yCo_{1-y}O_2$; $0<x\leq1$, $0<y<1$), lithium iron phosphates (e.g., $Li_xFePO_4$; $0<x\leq1$), and lithium nickel cobalt manganese composite oxides ($Li_xNi_{1-y-z}Co_yMn_zO_2$; $0<x\leq1$, $0<y<1$, $0<z<1$, $y+z<1$). The positive electrode potential can be made high by using these compounds as the positive electrode active material.

The positive electrode active material may have, for example, a particle shape. The positive electrode active material particles may be in the form of primary particles, may be in the form of secondary particles in which primary particles are aggregated, or may be a mixture of primary particles and secondary particles.

A primary particle size of the positive electrode active material is preferably 100 nm or more and 1 $\mu$m or less. A positive electrode active material having a primary particle size of 100 nm or more is easy to handle during industrial production. In a positive electrode active material having a primary particle size of 1 um or less, in-solid diffusion of lithium ions can proceed smoothly.

The positive electrode binder is blended to fill gaps among the dispersed positive electrode active material and also to bind the positive electrode active material with the positive electrode current collector. The positive electrode binder can include the first binder described above. The positive electrode binder may include another binder other than the first binder. The positive electrode binder may only include the first binder described above, may be a mixture of the first binder and another binder, or may only include another binder. As such another binder, the above-described fluorine-based resin or acrylic resin may be used singly.

Examples of such another binder include polytetrafluoroethylene (PTFE), polyvinylidene fluoride (PVDF), fluorine rubber, polyacrylic acid compounds, imide compounds, carboxymethyl cellulose (CMC), and salts of CMC. One of these may be used as the positive electrode binder, or alternatively, two or more may be used in combination as the positive electrode binder.

The electro-conductive agent is blended to improve current collection performance and to suppress contact resistance between the positive electrode active material and the positive electrode current collector. Examples of the electro-conductive agent include carbonaceous substances such as vapor grown carbon fiber (VGCF), carbon black such as acetylene black, and graphite. One of these may be used as the electro-conductive agent, or two or more may be used in combination as the electro-conductive agent. The electro-conductive agent may not be used.

In the positive electrode active material-containing layer, the positive electrode active material and the positive electrode binder are preferably blended in proportions of 80 mass% or more and 98 mass% or less, and 2 mass% or more and 20 mass% or less, respectively.

Due to the amount of the positive electrode binder of 2 mass% or more, sufficient electrode strength can be achieved. The positive electrode binder may function as an electrical insulator. Thus, in a case where the amount of the positive electrode binder is 20 mass% or less, the amount of electrical insulator in the electrode is reduced, and thus internal resistance can be decreased.

In a case where the electro-conductive agent is added, the positive electrode active material, the positive electrode binder, and the electro-conductive agent are preferably blended in proportions of 77 mass% or more and 95 mass% or less, 2 mass% or more and 20 mass% or less, and 3 mass% or more and 15 mass% or less, respectively.

Due to the amount of the electro-conductive agent of 3 mass% or more, the above-described effects can be exhibited. Due to the amount of the electro-conductive agent of 15 mass% or less, the proportion of electro-conductive agent to be contacted with the aqueous electrolyte can be reduced. In a case where this proportion is low, decomposition of the aqueous electrolyte can be reduced during storage at high temperatures.

In a case where the positive electrode binder includes the first binder, the proportion of the first binder in the positive electrode binder is preferably 1 mass% or more. The proportion of the first binder in the positive electrode binder may be 100 mass%. The proportion of the first binder refers to the total proportion of the fluorine-based resin and the acrylic resin in the positive electrode binder.

Preferably, the positive electrode further includes a film. The form of the film is not particularly limited. The film may be formed on a surface of the positive electrode, or may be formed inside the positive electrode active material-containing layer. The film may be exposed to the positive electrode surface. The positive electrode surface refers to a principal surface on a side not in contact with the positive electrode current collector out of principal surfaces of the positive electrode active material-containing layer. The film may be formed, for example, on an outer side of the first binder covering at least a part of the surfaces of the positive electrode active material particles. The film may be formed, for example, on the first binder covering at least a part of the surfaces of the positive electrode active material particles. The film may cover, for example, a portion of the surfaces of the positive electrode active material particles, which is not covered with the positive electrode binder. In a case where the positive electrode further includes a film in addition to the first binder, the contact between the positive electrode active material and the aqueous electrolyte can be further suppressed, so that side reactions can be suppressed, which is preferable.

The positive electrode current collector is preferably an aluminum foil, or an aluminum alloy foil including one or more selected from the group consisting of Mg, Ti, Zn, Ni, Cr, Mn, Fe, Cu, and Si.

A thickness of the aluminum foil or aluminum alloy foil is preferably 5 $\mu$m or more and 20 $\mu$m or less, and more preferably 15 $\mu$m or less. A purity of the aluminum foil is preferably 99 mass% or more. Contents of transition metals such as iron, copper, nickel, and chromium included in the aluminum foil or aluminum alloy foil are preferably 1 mass% or less.

The positive electrode current collector may include a portion where the positive electrode active material-containing layer is not formed, on a surface thereof. This portion can serve as a positive electrode current-collecting tab.

The positive electrode can be fabricated, for example, by the following method. First, a positive electrode active material, an electro-conductive agent, and a positive electrode binder are suspended in a solvent to prepare a slurry. The slurry is applied onto one side or both sides of a positive electrode current collector. Then, the applied slurry is dried to obtain a stack of a positive electrode active material-containing layer and the positive electrode current collector. Then, the stack is subjected to pressing. The positive electrode is fabricated in this manner.

Alternatively, the positive electrode may be fabricated by the following method. First, a positive electrode active material, an electro-conductive agent, and a positive electrode binder are mixed to obtain a mixture. Next, the mixture is formed into pellets. The positive electrode can then be obtained by disposing these pellets on the positive electrode current collector.

In a case where the positive electrode includes a film, the film can be formed, for example, by directly forming a film on the positive electrode, or by adding a film precursor to an aqueous electrolyte. The film precursor can be referred to as a covering precursor. In a case where the film precursor (or a covering precursor) is added to the aqueous electrolyte, for example, the film (or a covering precursor) can be formed by electrolyzing the film precursor (or a covering precursor) on the positive electrode at the time of initial charge. In this case, initial charge current is preferably less than 1 C (time discharge rate), and a temperature is preferably 25°C or higher.

Examples of a method of directly forming the film on the positive electrode include a method of forming the film using a film precursor by a solution method, a vapor deposition method, a spray method, or the like. Examples of the film precursor can include the same materials as those described for the negative electrode. Examples of the film precursor suitable for the method of directly forming the film on the positive electrode include materials including at least one selected from the group consisting of cyanates, sulfuric acid salts, lithium fluoride, lithium oxide, zinc oxide, and zinc hydroxide.

The solution method, the vapor deposition method, and the spray method can be performed in the same manner as described for the negative electrode.

A method of adding the film precursor (or the covering precursor) to the aqueous electrolyte will be described later.

3) Aqueous electrolyte

The aqueous electrolyte includes an aqueous solvent and an electrolyte salt. As the aqueous solvent, a solution including water can be used. The solution including water may be pure water, or a mixed solution or a mixed solvent of water and a substance other than water.

The aqueous electrolyte is, for example, an aqueous solution prepared by dissolving an electrolyte salt in an aqueous solvent. The aqueous electrolyte may be a gel aqueous electrolyte obtained by obtaining a composite of a polymeric material with the aqueous solution. Examples of the polymeric material include polyvinylidene fluoride (PVDF), polyacrylonitrile (PAN), and polyethylene oxide (PEO).

The aqueous solution preferably includes 1 mol or more of the aqueous solvent per 1 mol of the electrolyte salt as a solute. An amount of the aqueous solvent is more preferably 3.5 mol or more per 1 mol of the electrolyte salt.

It can be confirmed by GC-MS (Gas Chromatography-Mass Spectrometry) measurement that water is included in the aqueous electrolyte. In addition, the calculation of a salt concentration and a water content in the aqueous electrolyte can be performed, for example, by ICP (Inductively Coupled Plasma) emission analysis. A molar concentration (mol/L) can be calculated by weighing a specified amount of the aqueous electrolyte and calculating the concentration of the salt included therein. Numbers of moles of the solute and the solvent can be calculated by measuring a specific gravity of the aqueous electrolyte.

Examples of the electrolyte salt include lithium salts such as LiCl, LiBr, LiOH, $Li_2SO_4$, $LiNO_3$, $LiN(SO_2CF_3)_2$ (LiTFSI: lithium bis(trifluoromethanesulfonyl)imide), $LiN(SO_2F)_2$ (LiFSI: lithium bis(fluorosulfonyl)imide), and $LiB[(OCO)_2]_2$ (LiBOB: lithium bis oxalate borate). The type of the lithium salt to be used may be one or two or more.

The aqueous electrolyte preferably includes LiCl or LiTFSI as the electrolyte salt. LiCl is preferable from the viewpoint of cost and rate characteristics of the battery because it is inexpensive and has high electrical conductivity. LiTFSI is preferable because it can function as the film precursor as will be described later.

A pH of the aqueous electrolyte is preferably 3 to 14. This pH can be appropriately changed, and it is considered that the pH is preferably on an alkali side from the viewpoint of increasing the hydrogen overvoltage. A pH on the alkali side can further suppress generation of hydrogen. Examples of a method of adjusting the pH of the aqueous solution to the alkali side include addition of LiOH. However, a pH exceeding 12 is not preferable, since corrosion of the positive electrode current collector proceeds. The pH of the aqueous solution is preferably in a range of 3 to 14 and more preferably in a range of 3 to 9.

The aqueous electrolyte can further include an additive.

Examples of the additive include amide compounds, organic sulfur compounds, and salts including at least one metal selected from the group consisting of Zn, Sn, and Pb.

Each of the amide compound, the organic sulfur compound, and the salt including at least one metal selected from the group consisting of Zn, Sn, and Pb can be a film precursor.

Examples of the salt including at least one metal selected from the group consisting of Zn, Sn, and Pb can include $ZnCl_2$, $SnCl_2$, and $PbCl_2$. The type of the salt can be one or two or more. The salt may be dissolved or suspended in the aqueous electrolyte.

In a case where the aqueous electrolyte contains the salt including at least one metal selected from the group consisting of Zn, Sn, and Pb, a metal, metal oxide, or metal hydroxide including Zn, Sn, or Pb can be formed in the electrode. The metal can be, for example, a simple substance of metal precipitated by reduction of metal ions derived from the salt contained in the aqueous electrolyte. The metal oxide can be generated, for example, by oxidizing the deposited metal.

Examples of the metal or metal oxide including Zn, Sn, or Pb include metal zinc, metal tin, metal lead, zinc oxide, and zinc hydroxide. That is, in a case where the aqueous electrolyte contains the salt including at least one metal selected from the group consisting of Zn, Sn, and Pb, the film can be formed on the electrode. This contributes to improvement in cycle life performance.

Examples of the amide compound include urea, methylurea, ethylurea and acetamide, N-methylacetamide, and trifluoroacetamide. The type of the amide compound can be one or two or more.

Examples of the organic sulfur compound include dimethylsulfone.

In a case where the aqueous electrolyte includes an amide compound or an organic sulfur compound, melting points of the amide compound and the organic sulfur compound can be dropped by the lithium salt included in the aqueous electrolyte. Therefore, the amide compound and the organic sulfur compound may be in a liquid state at normal temperature in the aqueous electrolyte. Therefore, in the aqueous electrolyte including at least one selected from the group consisting of amide compounds and organic sulfur compounds, the proportion of water in a liquid component in the aqueous electrolyte can be reduced as compared with the aqueous electrolyte including neither the amide compound nor the organic sulfur compound. Therefore, as a result of suppressing contact between the active material and water, electrolysis of water can be suppressed.

In addition, the amide compound and the organic sulfur compound themselves can be electrolyzed in the battery. Upon electrolysis of the amide compound, cyanates may be formed in the electrode. Upon electrolysis of the organic sulfur compound, sulfuric acid salts may be formed in the electrode. That is, the film described above can be formed on the electrode. Therefore, in a case where the aqueous electrolyte includes at least one selected from the group consisting of amide compounds and organic sulfur compounds, it is possible to keep the resistance low while suppressing the electrolysis of water in the electrode.

The film (or the covering) including a sulfuric acid salt can be formed by decomposition of an electrolyte salt containing a sulfur atom in addition to addition of an additive. Examples of the electrolyte salt containing a sulfur atom include $Li_2SO_4$, $LiN(SO_2CF_3)_2$ (LiTFSI: lithium bis(trifluoromethanesulfonyl)imide), and $LiN(SO_2F)_2$ (LiFSI: lithium bis(fluorosulfonyl)imide). Therefore, the electrolyte salt containing a sulfur atom can function as the film precursor. The aqueous electrolyte preferably further includes an amide compound in addition to the electrolyte salt containing a sulfur atom. The aqueous electrolyte having the above configuration easily forms a film including both a sulfuric acid salt and a cyanate. Such a film (a covering) is preferable because both stability and low resistance can be achieved.

In addition, lithium ions included in the lithium salt can react with a material containing a fluorine atom or a material containing an oxygen atom included in the aqueous electrolyte to generate lithium fluoride or lithium oxide, respectively. Examples of the material containing a fluorine atom and the material containing an oxygen atom include an electrolyte salt and an aqueous solvent. In addition, in a case where the aqueous electrolyte further includes an amide compound, a cyanate can be generated by reaction with the amide compound. For example, lithium isocyanate can be generated. Thus, the lithium salt may function as the film precursor. The aqueous electrolyte including LiTFSI is preferable because it is easy to form a film (or a covering) including lithium fluoride.

In a case where the aqueous electrolyte includes the film precursor, formation of the film on the electrode can be performed, for example, by electrolyzing the film precursor on the electrode at the time of initial charge. In this case, initial charge current is preferably less than 1 C (time discharge rate), and a temperature is preferably 25°C or higher.

4) Separator

The separator may be made of, for example, a porous film or synthetic resin nonwoven fabric including polyethylene (PE), polypropylene (PP), cellulose, or polyvinylidene fluoride (PVDF). In view of safety, a porous film made of polyethylene or polypropylene is preferred. This is because, at a certain temperature, such a porous film melts and can shut off current.

As the separator, a film including at least inorganic solid particles, an aggregate or sintered body of inorganic solid particles, a film including inorganic solid particles and a polymeric material, for example, a composite film of inorganic solid particles and a polymeric material, or an ion exchange film can also be used. The inorganic solid particles can be, for example, solid electrolyte particles, and the film may be a solid electrolyte membrane. The solid electrolyte membrane may be, for example, a solid electrolyte composite membrane in which solid electrolyte particles are formed into a membrane using a polymeric material.

Examples of the inorganic solid particles can include particles of ceramics such as alumina and inorganic solid electrolyte. The inorganic solid electrolyte is a solid substance having Li ion conductivity. Having Li ion conductivity, as referred to herein, indicates exhibiting a lithium ion conductivity of $1 \times 10^{-6}$ S/cm or more at 25°C. Examples of the inorganic solid electrolyte include oxide solid electrolytes and sulfide solid electrolytes. Specific examples of the inorganic solid electrolyte will be described below.

Preferably used as the oxide solid electrolyte is a lithium phosphate solid electrolyte having a sodium (Na) super ionic conductor (NASICON) structure and represented by a general formula $Li_{1+x}M\alpha_2(PO_4)_3$. $M\alpha$ in the above general formula is, for example, one or more selected from the group consisting of titanium (Ti), germanium (Ge), strontium (Sr), zirconium (Zr), tin (Sn), aluminum (Al), and calcium (Ca). The subscript x is in a range of $0 \leq x \leq 2$.

Specific examples of the lithium phosphate solid electrolyte having the NASICON structure include a LATP compound represented by $Li_{1+x}Al_xTi_{2-x}(PO_4)_3$ where $0.1 \leq x \leq 0.5$; a compound represented by $Li_{1+x}Al_yM\beta_{2-y}(PO_4)_3$ where $M\beta$ is one or more selected from the group consisting of Ti, Ge, Sr, Zr, Sn, and Ca, $0 \leq x \leq 1$, and $0 \leq y \leq 1$; a compound represented by $Li_{1+x}Al_xGe_{2-x}(PO_4)_3$ where $0 \leq x \leq 2$; a compound represented by $Li_{1+x}Al_xZr_{2-x}(PO_4)_3$ where $0 \leq x \leq 2$; a

compound represented by $Li_{1+x+y}Al_xM\gamma_{2-x}Si_yP_{3-y}O_{12}$ where $M\gamma$ is one or more selected from the group consisting of Ti and Ge, $0<x\leq2$, and $0\leq y<3$; and a compound represented by $Li_{1+2x}Zr_{1-x}Ca_x(PO_4)_3$ where $0\leq x<1$.

In addition to the above lithium phosphate solid electrolyte, examples of the oxide solid electrolyte include amorphous LIPON compounds represented by $Li_xPO_yN_z$ where $2.6\leq x\leq3.5$, $1.9\leq y\leq3.8$, and $0.1\leq z\leq1.3$ (e.g., $Li_{2.9}PO_{3.3}N_{0.46}$); a compound having a garnet structure represented by $La_{5+x}A_xLa_{3-x}M\delta_2O_{12}$ where A is one or more selected from the group consisting of Ca, Sr, and Ba, $M\delta$ is one or more selected from the group consisting of Nb and Ta, and $0\leq x\leq0.5$; a compound represented by $Li_3M\delta_{2-x}L_2O_{12}$ where $M\delta$ is one or more selected from the group consisting of Nb and Ta, L may include Zr, and $0\leq x\leq0.5$; a compound represented by $Li_{7-3x}Al_xLa_3Zr_3O_{12}$ where $0\leq x\leq0.5$; a LLZ compound represented by $Li_{5+x}La_3M\delta_{2-x}Zr_xO_{12}$ where $M\delta$ is one or more selected from the group consisting of Nb and Ta, and $0\leq x\leq2$ (e.g., $Li_7La_3Zr_2O_{12}$); and a compound having a perovskite structure and represented by $La_{2/3-x}Li_xTiO_3$ where $0.3\leq x\leq0.7$.

As the inorganic solid particles, a single type of inorganic solid particles may be used, or a plurality of types of inorganic solid particles may be mixed and used.

The polymeric material may be a polymer including a single type of monomer unit, a copolymer including a plurality of types of monomer units, or a mixture thereof. The polymeric material preferably includes a monomer unit composed of a hydrocarbon having a functional group including one or more selected from the group consisting of oxygen (O), sulfur (S), nitrogen (N), and fluorine (F). As the polymeric material, a single type of polymeric material may be used, or a plurality of types of polymeric materials may be mixed and used.

The separator may include a plasticizer or an electrolyte salt in addition to the inorganic solid particles and the polymeric material. For example, in a case where the separator includes an electrolyte salt, the ion conductivity of the separator can be further enhanced.

The separator may be, for example, a plurality of separators each disposed between the positive electrode and the negative electrode. Alternatively, the separator may be one sheet of zigzag-folded separator. In the latter case, the positive electrode and the negative electrode are alternately disposed in a space formed by folding the separator.

5) Container member

As the container member, for example, a container made of a laminate film or a container made of a metal may be used.

A thickness of the laminate film is, for example, 0.5 mm or less, and preferably 0.2 mm or less.

As the laminate film, used is a multilayer film including a plurality of resin layers and a metal layer sandwiched between the respective resin layers. The resin layer may include, for example, a polymeric material such as polypropylene (PP), polyethylene (PE), nylon, or polyethylene terephthalate (PET). The metal layer is preferably made of an aluminum foil or an aluminum alloy foil, in order to reduce weight. The laminate film may be formed into the shape of the container member, by heat-sealing.

A wall thickness of the metal container is, for example, 1 mm or less, more preferably 0.5 mm or less, and further preferably 0.2 mm or less.

The metal container is made, for example, of aluminum or an aluminum alloy. The aluminum alloy preferably includes elements such as magnesium, zinc, and silicon. In a case where the aluminum alloy includes a transition metal such as iron, copper, nickel, or chromium, a content thereof is preferably 100 ppm by mass or less.

The shape of the container member is not particularly limited. The shape of the container member may be, for example, flat (thin), prismatic, cylindrical, coin-shaped, or button-shaped. The container member may be appropriately selected depending on the battery dimensions and the use of the battery.

Since the secondary battery can suppress side reactions, gas generation due to side reactions can be reduced. Therefore, the shape of the container member may be a sealed type, a semi-sealed type, or an open type. From the viewpoint of preventing water from entering from the outside, the container member is preferably a sealed type.

6) Negative electrode terminal

The negative electrode terminal may be formed of a material that is electrically stable in a potential range of 1 V or more and 3 V or less (vs. $Li/Li^+$) relative to an oxidation-reduction potential of lithium, and having electrical conductivity. Specific examples of the material for the negative electrode terminal include copper, nickel, stainless steel, and aluminum, and aluminum alloys including at least one selected from the group consisting of Mg, Ti, Zn, Mn, Fe, Cu, and Si. Aluminum or an aluminum alloy is preferably used as the material for the negative electrode terminal. The negative electrode terminal is preferably made of the same material as the negative electrode current collector, in order to reduce contact resistance between the negative electrode terminal and the negative electrode current collector.

7) Positive electrode terminal

The positive electrode terminal can be formed of a material that is electrically stable in a potential range of 3 V or more and 4.5 V or less (vs. Li/Li$^+$) relative to the oxidation-reduction potential of lithium, and having electrical conductivity. Examples of the material for the positive electrode terminal include aluminum and aluminum alloys including at least one selected from the group consisting of Mg, Ti, Zn, Mn, Fe, Cu, and Si. The positive electrode terminal is preferably formed of the same material as the positive electrode current collector, in order to reduce contact resistance between the positive electrode terminal and the positive electrode current collector.

Next, the secondary battery according to the approach will be more specifically described with reference to the drawings.

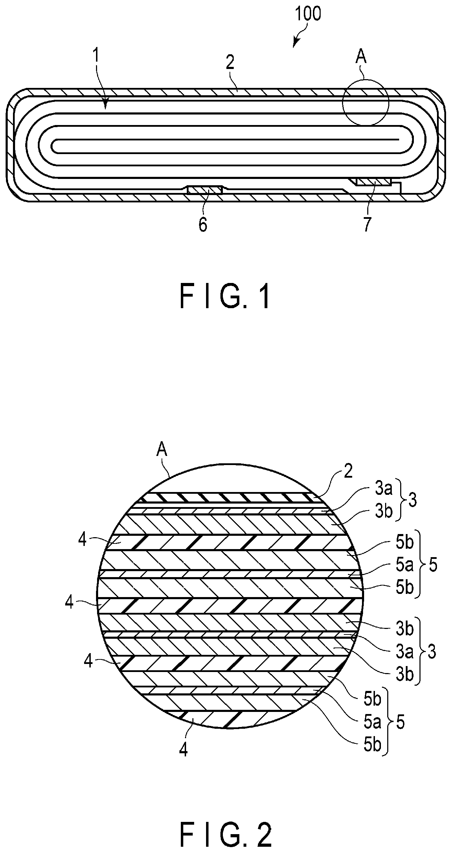

FIG. 1 is a cross-sectional view schematically illustrating an example of a secondary battery. FIG. 2 is an enlarged cross-sectional view of a section A of the secondary battery illustrated in FIG. 1.

A secondary battery 100 as illustrated in FIGS. 1 and 2 includes a bag-shaped container member 2 as illustrated in FIG. 1, an electrode group 1 as illustrated in FIGS. 1 and 2, and an aqueous electrolyte which is not illustrated. The electrode group 1 and the aqueous electrolyte are housed in the bag-shaped container member 2. The aqueous electrolyte (not illustrated) is held in the electrode group 1.

The bag-shaped container member 2 is made of a laminate film including two resin layers and a metal layer sandwiched between the resin layers.

As illustrated in FIG. 1, the electrode group 1 is a wound electrode group in a flat form. The wound electrode group 1 in a flat form includes a negative electrode 3, a separator 4, and a positive electrode 5, as illustrated in FIG. 2. The separator 4 is sandwiched between the negative electrode 3 and the positive electrode 5.

The negative electrode 3 includes a negative electrode current collector 3a and a negative electrode active material-containing layer 3b. At a portion of the negative electrode 3 positioned outermost among the wound electrode group 1, the negative electrode active material-containing layer 3b is formed only on an inner surface of the negative electrode current collector 3a, as illustrated in FIG. 2. For the other portions of the negative electrode 3, the negative electrode active material-containing layers 3b are formed on both sides of the negative electrode current collector 3a.

The positive electrode 5 includes a positive electrode current collector 5a and positive electrode active material-containing layers 5b formed on both sides of the positive electrode current collector 5a.

As illustrated in FIG. 1, a negative electrode terminal 6 and a positive electrode terminal 7 are positioned in vicinity of an outer peripheral end of the wound electrode group 1. The negative electrode terminal 6 is connected to a portion of the negative electrode current collector 3a positioned outermost. The positive electrode terminal 7 is connected to a portion of the positive electrode current collector 5a positioned outermost. The negative electrode terminal 6 and the positive electrode terminal 7 extend outside from an opening of the bag-shaped container member 2. A thermoplastic resin layer is provided on an inner surface of the bag-shaped container member 2, and the opening is closed by heat-sealing the resin layer.

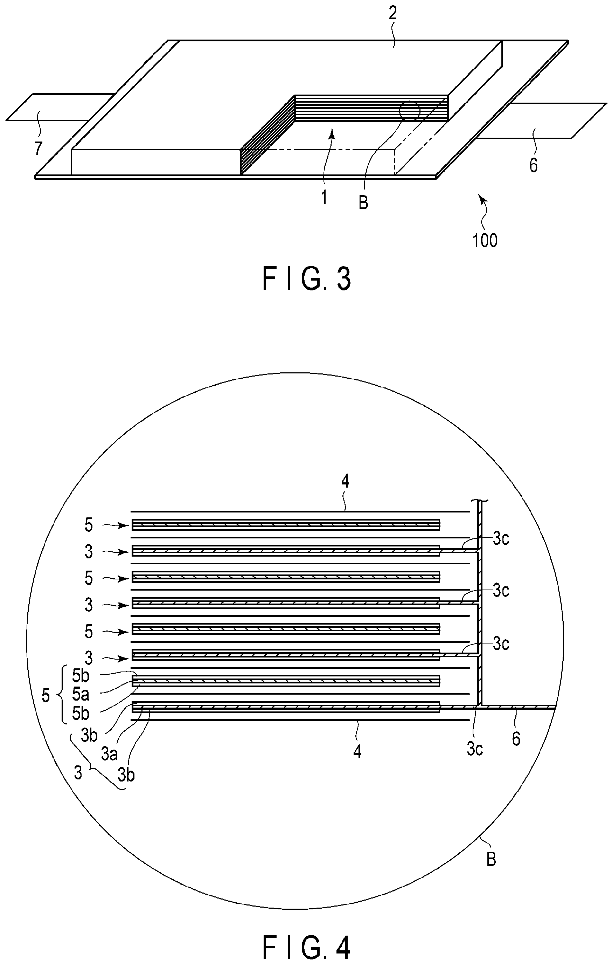

The secondary battery according to the approach is not limited to the secondary battery having the structure illustrated in FIGS. 1 and 2, and may be, for example, a battery having a structure as illustrated in FIGS. 3 and 4.

FIG. 3 is a partially cut-out perspective view schematically illustrating another example of the secondary battery. FIG. 4 is an enlarged cross-sectional view of a section B of the secondary battery illustrated in FIG. 3.

A secondary battery 100 as illustrated in FIGS. 3 and 4 includes an electrode group 1 as illustrated in FIGS. 3 and 4, a container member 2 as illustrated in FIG. 3, and an aqueous electrolyte which is not illustrated. The electrode group 1 and the aqueous electrolyte are housed in the container member 2. The aqueous electrolyte is held in the electrode group 1.

The container member 2 is made of a laminate film including two resin layers and a metal layer sandwiched between the resin layers.

As illustrated in FIG. 4, the electrode group 1 is a stacked electrode group. The stacked electrode group 1 has a structure in which negative electrodes 3 and positive electrodes 5 are alternately stacked with separators 4 sandwiched therebetween.

The electrode group 1 includes a plurality of the negative electrodes 3. Each of the negative electrodes 3 includes a negative electrode current collector 3a and negative electrode active material-containing layers 3b supported on both sides of the negative electrode current collector 3a. The electrode group 1 further includes a plurality of the positive electrodes 5. Each of the positive electrodes 5 includes a positive electrode current collector 5a and positive electrode active material-containing layers 5b supported on both sides of the positive electrode current collector 5a.

The negative electrode current collector 3a of each of the negative electrodes 3 includes, at one end, a portion where the negative electrode active material-containing layer 3b is not supported on either surface. This portion serves as a negative electrode current-collecting tab 3c. As shown in FIG. 4, the negative electrode current-collecting tabs 3c do not overlap the positive electrodes 5. A plurality of the negative electrode current-collecting tabs 3c are electrically connected to a strip-shaped negative electrode terminal 6. A tip of the strip-shaped negative electrode terminal 6 is drawn outside from the container member 2.

Although not illustrated, the positive electrode current collector 5a of each of the positive electrodes 5 includes, at one end, a portion where the positive electrode active material-containing layer 5b is not supported on either surface. This portion serves as a positive electrode current-collecting tab. The positive electrode current-collecting tabs do not overlap the negative electrodes 3 in the same manner as the negative electrode current-collecting tabs 3c do not overlap the positive electrodes 5. Further, the positive electrode current-collecting tabs are located on an opposite side of the electrode group 1 relative to the negative electrode current-collecting tabs 3c. The positive electrode current-collecting tabs are electrically connected to a strip-shaped positive electrode terminal 7. A tip of the strip-shaped positive electrode terminal 7 is located on an opposite side relative to the negative electrode terminal 6 and drawn outside from the container member 2.

(Measurement method>

The analysis of the secondary battery can be performed as follows.

(Extraction of electrode)

In a case of analyzing the electrode included in the secondary battery, the secondary battery is disassembled and the electrode is extracted. The electrode is washed with dimethyl carbonate and then dried to obtain a measurement electrode.

(Measurement of first binder amount)

An amount of the first binder included in the electrode can be measured as follows.

The active material-containing layer is peeled off from the measurement electrode obtained by performing the washing and drying described above, and a mass thereof is measured in advance. The active material-containing layer is dispersed in a solvent such as N-methylpyrrolidone (NMP), and the first binder is dissolved in the solvent. The precipitated active material and insoluble components such as the electro-conductive agent are separated by filtration and collected, and a mass thereof is measured. A difference between the mass of the active material-containing layer measured in advance and the mass of the precipitate can be measured as a first binder amount.

(FT-IR analysis)

Fourier transform infrared spectroscopy (FT-IR) analysis of the surface of the electrode can be performed as follows.

The measurement electrode is subjected to FT-IR analysis by an ATR (Attenuated Total Reflection) method.

Examples of the FT-IR apparatus include

VERTEX70v/HYPERION3000 manufactured by BRUKER Corporation or an apparatus having a function equivalent thereto. A resolution is set to 4 cm$^{-1}$, and a number of times of integration is set to 128. As described above, the infrared absorption spectrum of the electrode surface is obtained. The fact that the electrode includes the acrylic resin and the type of the acrylic resin included in the electrode can be identified from the obtained infrared absorption spectrum.

For example, if the obtained infrared absorption spectrum has an absorption peak of the infrared absorption spectrum of the electrode surface including the acrylic resin described above, it can be identified that the electrode includes the acrylic resin.

As another example, if the obtained infrared absorption spectrum has the same characteristics as those of the infrared absorption spectrum of the surface of the electrode including the polymer including an acrylic acid ester or a methacrylic acid ester described above, it can be identified that the electrode includes the polymer including an acrylic acid ester or a methacrylic acid ester. Similarly, it can be identified that the electrode includes the polymer including acrylonitrile.

(XPS analysis of surface of electrode)

XPS analysis of the surface of the electrode can be performed as follows.

As an XPS apparatus, Quantera SXM manufactured by ULVAC-PHI, Inc. or an apparatus having a function equivalent thereto can be used. As an excitation X-ray source, a single-crystal spectroscopic Al-K$\beta$ ray (1486.6 eV) is used. An X-ray output is 4 kW (13 kV $\times$ 310 mA), a photoelectron detection angle is 45°, and an analysis area is about 4 mm × 0.2 mm. Scanning is performed at 0.10 eV/step.

Data processing of smoothing and horizontal axis correction is performed on spectrum data obtained by XPS analysis of the measurement electrode. As the smoothing, 9-point smoothing is performed, and, as the horizontal axis correction, correction is performed assuming that an $Nb_{5/2}$ peak appears at 207.1 eV ($Nb^{3+}$). As a result, an XPS spectrum for the electrode surface can be obtained.

If the obtained XPS spectrum has the peak of the XPS spectrum of the surface of the electrode including the fluorine-based resin described above, it can be identified that the electrode includes the fluorine-based resin.

From the obtained XPS spectrum, the fact that the electrode includes the film and the type of the substance included in the film can be identified. For example, if the obtained XPS spectrum has the same characteristics as those of the XPS spectrum of the surface of the electrode including the film (or the covering) containing a cyanate described above, it can be identified that the electrode includes the film (or the covering) containing a cyanate. Similarly, it can be identified that the electrode includes a film (or a covering) containing a sulfuric acid salt. It can likewise be identified that the electrode includes a film (or a covering) including at least one selected from the group consisting of metal zinc, metal tin, metal lead, lithium fluoride, lithium oxide, zinc oxide and zinc hydroxide.

(XPS analysis of first binder)

XPS analysis of the first binder can be performed as follows.

The active material-containing layer is peeled from the measurement electrode and dispersed in a solvent such as N-methylpyrrolidone, and the first binder is dissolved in the solvent. This is filtered off to obtain a liquid fraction. The obtained liquid fraction is dried to remove the solvent, thereby obtaining a film-shaped first binder (binder film). The obtained binder film is subjected to XPS analysis.

As an XPS apparatus, Quantera SXM manufactured by ULVAC-PHI, Inc. or an apparatus having a function equivalent thereto can be used. As an excitation X-ray source, a single-crystal spectroscopic Al-Kα ray (1486.6 eV) is used. An X-ray output is 4 kW (13 kV × 310 mA), a photoelectron detection angle is 45°, and an analysis area is about 4 mm × 0.2 mm. Scanning is performed at 0.10 eV/step.

In a spectrum obtained by the XPS analysis of the binder film, a peak appearing within a range of 680 eV or more and 691 eV or less is an F1s peak. From an integrated intensity of the F1s peak, an atomic weight ratio of fluorine atoms (mol/mol) can be calculated by an internal calibration curve of a measurement apparatus. The atomic weight ratio of fluorine atoms is the amount $A_F$ of the fluorine atom.

A peak appearing within a range of 528 eV or more and 538 eV or less is an O1s peak. In the same manner as described above, the amount Ao of the oxygen atom can be calculated from an integrated intensity of the O1s peak. A peak appearing within a range of 392 eV or more and 408 eV or less is an N1s peak. In the same manner as described above, the amount $A_N$ of the nitrogen atom can be calculated from an integrated intensity of the N1s peak.

In a case where the proportion of the acrylic resin in the first binder is 5% or more and 70% or less, the $A_F$, $A_O$, and $A_N$ can satisfy $0.01 \leq A_F/(A_F+A_O+2A_N) \leq 0.95$.

(Raman spectroscopy)

It can be confirmed by subjecting the aqueous electrolyte to Raman spectroscopy that the aqueous electrolyte includes at least one selected from the group consisting of an amide compound and an organic sulfur compound.

In a case where the aqueous electrolyte is included in the battery, the battery is disassembled, and then the electrode can be extracted and subjected to Raman spectroscopy as a sample without washing the electrode. In this way, the aqueous electrolyte attached to the electrode can be measured. Alternatively, the aqueous electrolyte may be extracted and subjected to Raman spectroscopy as a sample.

As a Raman spectrometer, NRS-7500 manufactured by JASCO Corporation or an apparatus having a function equivalent thereto can be used. The sample described above can be sealed in a sample container such as a glass tube and measured through the sample container. The measurement can be performed using, for example, laser light having a wavelength of 532 nm.

The secondary battery according to the first approach includes an aqueous electrolyte, a positive electrode, and a negative electrode. At least one of the positive electrode or the negative electrode includes a first binder. The first binder includes a fluorine-based resin and an acrylic resin. Therefore, the secondary battery is excellent in cycle life performance.

(Second approach)

According to a second approach, a battery module is provided. The battery module includes a plurality of the secondary batteries according to the first approach.

In the battery module, each of single-batteries may be disposed to be electrically connected in series or in parallel, or may be disposed in a combination of series connection and parallel connection.

Next, an example of the battery module according to the approach will be described, with reference to the drawings.

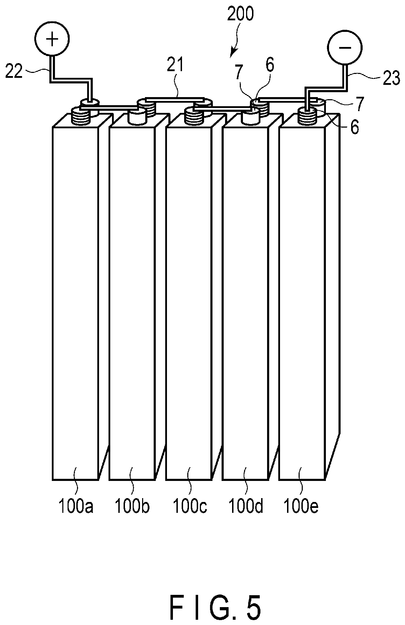

FIG. 5 is a perspective view schematically illustrating an example of a battery module. A battery module 200 illustrated in FIG. 5 includes five single-batteries 100a to 100e, four bus bars 21, a positive electrode-side lead 22, and a negative electrode-side lead 23. Each of the five single-batteries 100a to 100e is the secondary battery according to the first approach.

The bus bar 21 connects, for example, a negative electrode terminal 6 of the one single-battery 100a and a positive electrode terminal 7 of the single-battery 100b positioned adjacent thereto. In such a manner, the five single-batteries 100 are thus connected in series by the four bus bars 21. That is, the battery module 200 illustrated in FIG. 5 is a battery module in which five single-batteries are connected in series. Although no example is illustrated, in a battery module including a plurality of single-batteries that are electrically connected in parallel, for example, the single-batteries may be electrically connected by having a plurality of negative electrode terminals connected to each other by bus bars and also having a plurality of positive electrode terminals connected to each other by bus bars.

The positive electrode terminal 7 of at least one battery among the five single-batteries 100a to 100e is electrically connected to the positive electrode-side lead 22 for external connection. In addition, the negative electrode terminal 6 of at least one battery among the five single-batteries 100a to 100e is electrically connected to the negative electrode-side lead 23 for external connection.

The battery module according to the second approach includes the secondary battery according to the first approach. This contributes to achievement of excellent cycle life performance.

(Third approach)

According to a third approach, a battery pack is provided. The battery pack includes the battery module according to the second approach. The battery pack may include a single secondary battery according to the first approach, in place of the battery module according to the second approach.

The battery pack may further include a protective circuit. The protective circuit has a function to control charge and discharge of the secondary battery. Alternatively, a circuit included in an apparatus where the battery pack is used as a power source (for example, an electronic device or an automobile) may be used as the protective circuit for the battery pack.

Moreover, the battery pack may further include an external power distribution terminal. The external power distribution terminal is configured to externally output current from the secondary battery, and/or to input external current into the secondary battery. In other words, in a case where the battery pack is used as a power source, the current is supplied outside via the external power distribution terminal. When the battery pack is charged, charge current (including regenerative energy of motive force of a vehicle such as an automobile) is supplied to the battery pack via the external power distribution terminal.

Next, an example of the battery pack according to the approach will be described, with reference to the drawings.

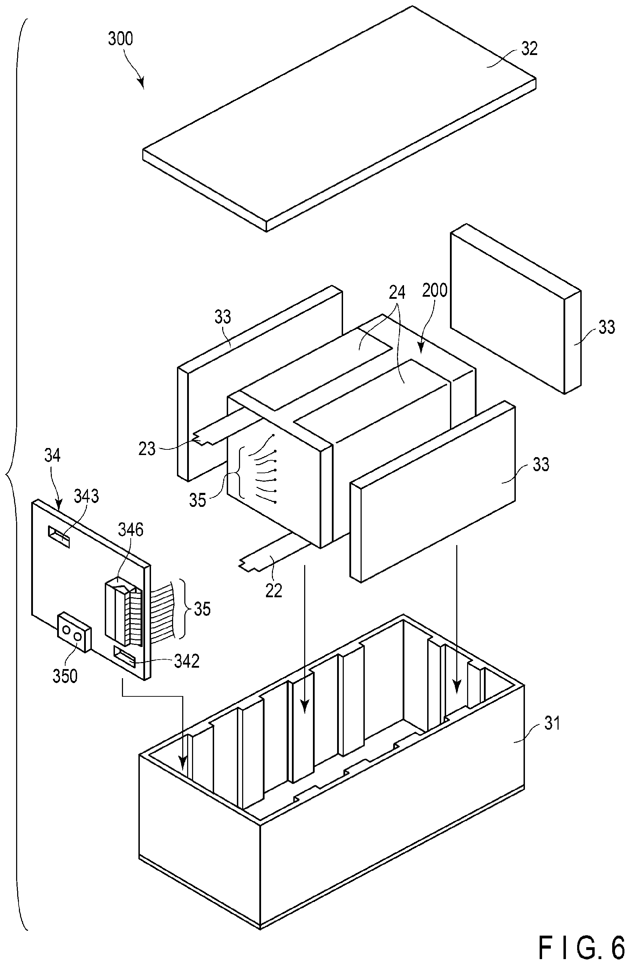

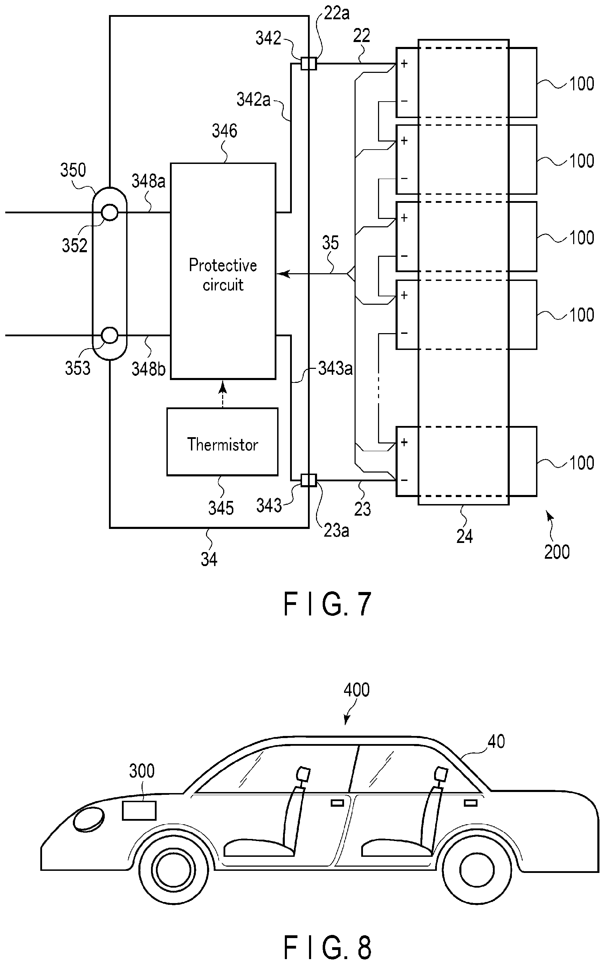

FIG. 6 is an exploded perspective view schematically illustrating an example of a battery pack. FIG. 7 is a block diagram illustrating an example of an electric circuit of the battery pack illustrated in FIG. 6.

A battery pack 300 as illustrated in FIGS. 6 and 7 includes a housing container 31, a lid 32, protective sheets 33, a battery module 200, a printed wiring board 34, wirings 35, and an insulating plate (not illustrated).

The housing container 31 illustrated in FIG. 6 is a prismatic bottomed container having a rectangular bottom surface. The housing container 31 is configured to be capable of housing the protective sheets 33, the battery module 200, the printed wiring board 34, and the wirings 35. The lid 32 has a rectangular shape. The lid 32 covers the housing container 31 to house the battery module 200 and the like. Although not illustrated, the housing container 31 and the lid 32 are provided with openings, connection terminals, or the like for connection to an external device or the like.

The battery module 200 includes a plurality of single-batteries 100, a positive electrode-side lead 22, a negative electrode-side lead 23, and adhesive tapes 24.

At least one of the single-batteries 100 is the secondary battery according to the first approach. The single-batteries 100 are electrically connected in series, as illustrated in FIG. 7. The single-batteries 100 may be electrically connected in parallel, or connected in a combination of in series and in parallel. If the single-batteries 100 are connected in parallel, battery capacity increases as compared to a case in which they are connected in series.

The adhesive tapes 24 fasten the single-batteries 100. Instead of the adhesive tape 24, a heat-shrinkable tape may be used to fix the single-batteries 100. In this case, the protective sheets 33 are disposed on both side surfaces of the battery module 200, and the heat shrinkable tape is wound around the battery module 200 and protective sheets 33. After that, the heat shrinkable tape is shrunk by heating to bundle the single-batteries 100.

One end of the positive electrode-side lead 22 is connected to the battery module 200. The one end of the positive electrode-side lead 22 is electrically connected to positive electrode(s) of one or more of the single-batteries 100. One end of the negative electrode-side lead 23 is connected to the battery module 200. The one end of the negative electrode-side lead 23 is electrically connected to negative electrode(s) of one or more of the single-batteries 100.

The printed wiring board 34 is provided along one face in the short side direction among inner surfaces of the housing container 31. The printed wiring board 34 includes a positive electrode-side connector 342, a negative electrode-side connector 343, a thermistor 345, a protective circuit 346, wirings 342a and 343a, an external power distribution terminal 350, a plus-side wiring (positive-side wiring) 348a, and a minus-side wiring (negative-side wiring) 348b. One principal surface of the printed wiring board 34 faces a side surface of the battery module 200. An insulating plate (not illustrated) is sandwiched between the printed wiring board 34 and the battery module 200.

The other end 22a of the positive electrode-side lead 22 is electrically connected to the positive electrode-side connector 342. The other end 23a of the negative electrode-side lead 23 is electrically connected to the negative electrode-side connector 343.

The thermistor 345 is fixed to one principal surface of the printed wiring board 34. The thermistor 345 detects the temperature of each of the single-batteries 100 and transmits detection signals to the protective circuit 346.

The external power distribution terminal 350 is fixed to the other principal surface of the printed wiring board 34. The external power distribution terminal 350 is electrically connected to a device that exists outside the battery pack 300. The external power distribution terminal 350 includes a positive-side terminal 352 and a negative-side terminal 353.

The protective circuit 346 is fixed to the other principal surface of the printed wiring board 34. The protective circuit 346 is connected to the positive-side terminal 352 via the plus-side wiring 348a. The protective circuit 346 is connected to the negative-side terminal 353 via the minus-side wiring 348b. In addition, the protective circuit 346 is electrically connected to the positive electrode-side connector 342 via the wiring 342a. The protective circuit 346 is electrically connected to the negative electrode-side connector 343 via the wiring 343a. Furthermore, the protective circuit 346 is electrically connected to each of the single-batteries 100 via the wiring 35.

The protective sheets 33 are disposed on both inner side surfaces of the housing container 31 in the long side direction and on the inner side surface in the short side direction facing the printed wiring board 34 across the battery module 200. The protective sheets 33 are made of, for example, resin or rubber.

The protective circuit 346 controls charge and discharge of the single-batteries 100. The protective circuit 346 is also configured to cut-off electric connection between the protective circuit 346 and the external power distribution terminal 350 (positive-side terminal 352, negative-side terminal 353) to an external device, based on detection signals transmitted from the thermistor 345 or detection signals transmitted from each of the single-batteries 100 or the battery module 200.

An example of the detection signal transmitted from the thermistor 345 is a signal indicating that the temperature of the single-battery(s) 100 is detected to be a predetermined temperature or higher. Examples of the detection signal transmitted from each of the single-batteries 100 or the battery module 200 include signals indicating detection of over-charge, over-discharge, and overcurrent of the single-battery(s) 100. In a case where over-charge or the like for each of the single-batteries 100 is detected, the battery voltage may be detected, or a positive electrode potential or negative electrode potential may be detected. In the latter case, a lithium electrode to be used as a reference electrode is inserted into each of the single-batteries 100.

Note that, as the protective circuit 346, a circuit included in a device (for example, an electronic device or an automobile) that uses the battery pack 300 as a power source may be used.

As described above, the battery pack 300 includes the external power distribution terminal 350. Hence, the battery pack 300 can output current from the battery module 200 to an external device and input current from an external device to the battery module 200 via the external power distribution terminal 350. In other words, when the battery pack 300 is used as a power source, the current from the battery module 200 is supplied to an external device via the external power distribution terminal 350. When the battery pack 300 is charged, a charge current from an external device is supplied to the battery pack 300 via the external power distribution terminal 350. If the battery pack 300 is used as an onboard battery, regenerative energy of motive force of a vehicle can be used as the charge current from the external device.

Note that the battery pack 300 may include a plurality of the battery modules 200. In this case, the battery modules 200 may be connected in series, may be connected in parallel, or may be connected in a combination of in series and in parallel. The printed wiring board 34 and the wirings 35 may not be used. In this case, the positive electrode-side lead 22 and the negative electrode-side lead 23 may respectively be used as the positive-side terminal 352 and negative-side terminal 353 of the external power distribution terminal 350.

Such a battery pack is used, for example, in applications where excellent cycle performance is demanded when a large current is extracted. More specifically, the battery pack is used as, for example, a power source for electronic devices, a stationary battery, or an onboard battery for various types of vehicles. An example of the electronic device can be a digital camera. The battery pack is particularly suitably used as the onboard battery.

The battery pack according to the third approach includes the secondary battery according to the first approach or the battery module according to the second approach. This contributes to achievement of excellent cycle life performance.

(Fourth approach)

According to a fourth approach, a vehicle is provided. This vehicle is mounted with the battery pack according to the third approach.

In the vehicle, the battery pack is configured, for example, to recover regenerative energy from motive force of the vehicle. The vehicle may include a mechanism (regenerator) configured to convert kinetic energy of the vehicle into regenerative energy.

Examples of the vehicle include two-wheeled to four-wheeled hybrid electric automobiles, two-wheeled to four-wheeled electric automobiles, electrically assisted bicycles, and railway cars.

The mounting position of the battery pack within the vehicle is not particularly limited. For example, in a case where the battery pack is mounted in an automobile, the battery pack may be mounted in an engine compartment of the vehicle, in a rear part of the vehicle body, or under a seat.

The vehicle may be mounted with a plurality of the battery packs. In this case, batteries included in each of the battery packs may be electrically connected in series, electrically connected in parallel, or electrically connected in a combination of in series and in parallel. For example, when each of the battery packs includes a battery module, the battery modules may be electrically connected in series, may be electrically connected in parallel, or may be electrically connected in a combination of in series and in parallel. Alternatively, in a case where each of the battery packs includes a single battery, the batteries may be electrically connected in series, electrically connected in parallel, or electrically connected in a combination of in series and in parallel.

Next, an example of the vehicle according to the approach will be described, with reference to the drawings.

FIG. 8 is a partially see-through diagram schematically illustrating an example of a vehicle.

A vehicle 400 as illustrated in FIG. 8 includes a vehicle body 40 and a battery pack 300 according to the third approach. In the example illustrated in FIG. 8, the vehicle 400 is a four-wheeled automobile.

This vehicle 400 may have a plurality of battery packs 300 mounted therein. In this case, the batteries (e.g., single-batteries or battery modules) included in the battery packs 300 may be connected in series, connected in parallel, or connected in a combination of in series and in parallel.

In FIG. 8, illustrated is an example where the battery pack 300 is mounted in an engine compartment located at the front of the vehicle body 40. As described above, for example, the battery pack 300 may be alternatively mounted in a rear part of the vehicle body 40, or under a seat. The battery pack 300 may be used as a power source for the vehicle 400. The battery pack 300 can also recover regenerative energy of motive force of the vehicle 400.

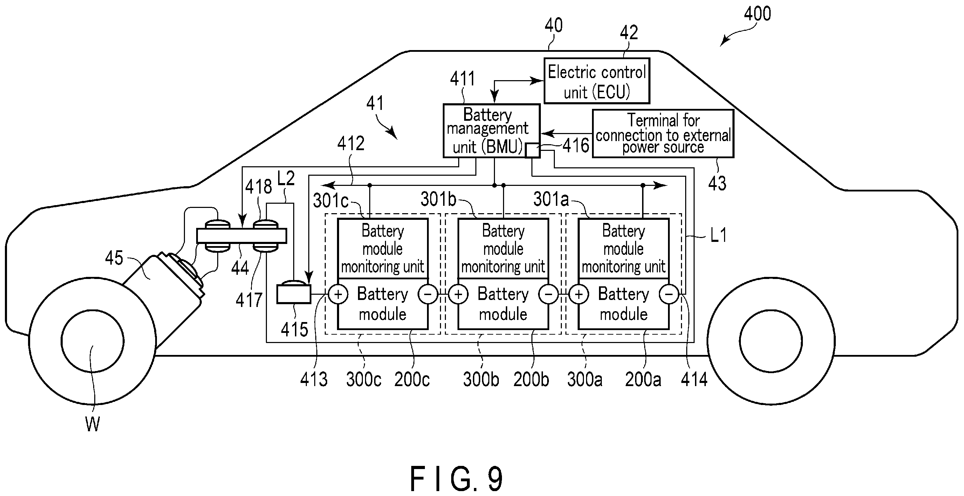

Next, with reference to FIG. 9, an aspect of operation of the vehicle according to the approach will be described.

FIG. 9 is a diagram schematically illustrating an example of a control system related to an electric system in the vehicle. A vehicle 400 as illustrated in FIG. 9 is an electric automobile.

The vehicle 400 illustrated in FIG. 9 includes a vehicle body 40, a vehicle power source 41, a vehicle electric control unit (ECU) 42, which is a master controller of the vehicle power source 41, an external terminal (a terminal for connection to an external power source) 43, an inverter 44, and a drive motor 45.

The vehicle 400 includes the vehicle power source 41, for example, in an engine compartment, in a rear part of the vehicle body of the automobile, or under a seat. In FIG. 9, the position of the vehicle power source 41 mounted in the vehicle 400 is schematically illustrated.

The vehicle power source 41 includes a plurality of (for example, three) battery packs 300a, 300b and 300c, a battery management unit (BMU) 411, and a communication bus 412.

The battery pack 300a includes a battery module 200a and a battery module monitoring unit 301a (e.g., a VTM: voltage temperature monitoring). The battery pack 300b includes a battery module 200b and a battery module monitoring unit 301b. The battery pack 300c includes a battery module 200c and a battery module monitoring unit 301c. The battery packs 300a to 300c are battery packs similar to the above-described battery pack 300, and the battery modules 200a to 200c are battery modules similar to the above-described battery module 200. The battery modules 200a to 200c are electrically connected in series. The battery packs 300a, 300b and 300c can each be independently removed, and may be exchanged by a different battery pack 300.

Each of the battery modules 200a to 200c includes a plurality of single-batteries connected in series. At least one of the single-batteries is the secondary battery according to the first approach. The battery modules 200a to 200c each perform charge and discharge via a positive electrode terminal 413 and a negative electrode terminal 414.

The battery management unit 411 performs communication with the battery module monitoring units 301a to 301c and collects information on a voltage, a temperature or the like of each of the single-batteries 100 included in the battery modules 200a to 200c included in the vehicle power source 41. In this manner, the battery management unit 411 collects information on security of the vehicle power source 41.

The battery management unit 411 and the battery module monitoring units 301a to 301c are connected via the communication bus 412. In the communication bus 412, a set of communication lines is shared at a plurality of nodes (i.e., the battery management unit 411 and one or more battery module monitoring units 301a to 301c). The communication bus 412 is, for example, a communication bus configured based on CAN (control area network) standard.

The battery module monitoring units 301a to 301c measure a voltage and a temperature of each of the single-batteries in the battery modules 200a to 200c based on commands from the battery management unit 411. It is possible, however, to measure the temperatures only at several points per battery module, and the temperatures of all of the single-batteries need not be measured.

The vehicle power source 41 may also have an electromagnetic contactor (for example, a switch unit 415 illustrated in FIG. 9) for switching on and off electrical connection between the positive electrode terminal 413 and the negative electrode terminal 414. The switch unit 415 includes a precharge switch (not illustrated), which is turned on when the battery modules 200a to 200c are charged, and a main switch (not illustrated), which is turned on when output from the battery modules 200a to 200c is supplied to a load. The precharge switch and the main switch each include a relay circuit (not illustrated), which is switched on or off based on a signal provided to a coil disposed near the switch elements. The electromagnetic contactor such as the switch unit 415 is controlled based on control signals from the battery management unit 411, or the vehicle ECU 42 which controls the operation of the entire vehicle 400.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 is controlled based on control signals from the battery management unit 411, or the vehicle ECU 42 which controls the entire operation of the vehicle. Due to the inverter 44 being controlled, output voltage from the inverter 44 is adjusted.

The drive motor 45 is rotated by electric power supplied from the inverter 44. The drive force generated by rotation of the drive motor 45 is transferred to an axle and driving wheels W via a differential gear unit, for example.

The vehicle 400 also includes a regenerative brake mechanism (regenerator), though not illustrated. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The converted direct current is inputted into the vehicle power source 41.

One terminal of a connecting line L1 is connected to the negative electrode terminal 414 of the vehicle power source 41. The other terminal of the connecting line L1 is connected to a negative electrode input terminal 417 of the inverter 44. A current detector (current detecting circuit) 416 in the battery management unit 411 is provided on the connecting line L1 between the negative electrode terminal 414 and negative electrode input terminal 417.

One terminal of a connecting line L2 is connected to the positive electrode terminal 413 of the vehicle power source 41. The other terminal of the connecting line L2 is connected to a positive electrode input terminal 418 of the inverter 44. The switch unit 415 is provided on the connecting line L2 between the positive electrode terminal 413 and the positive electrode input terminal 418.

The external terminal 43 is connected to the battery management unit 411. The external terminal 43 can be connected, for example, to an external power source.

The vehicle ECU 42 performs cooperative control of the vehicle power source 41, the switch unit 415, the inverter 44, and the like, together with other management units and control units including the battery management unit 411 in response to inputs operated by a driver or the like. Through the cooperative control by the vehicle ECU 42 and the like, output of electric power from the vehicle power source 41, charge of the vehicle power source 41, and the like are controlled, thereby performing management of the whole vehicle 400. Data on the security of the vehicle power source 41, such as a remaining capacity of the vehicle power source 41, are transferred between the battery management unit 411 and the vehicle ECU 42 via communication lines.

The vehicle according to the fourth approach is mounted with the battery pack according to the third approach. Therefore, the vehicle has high reliability because of high cycle life performance of the battery pack.

<Fifth Approach>

According to a fifth approach, a stationary power supply that includes the battery pack according to the approach is provided.

The stationary power supply according to the approach may include the battery module according to the approach or the battery according to the approach, instead of the battery pack according to the approach. The stationary power supply according to the approach can exhibit a long life.

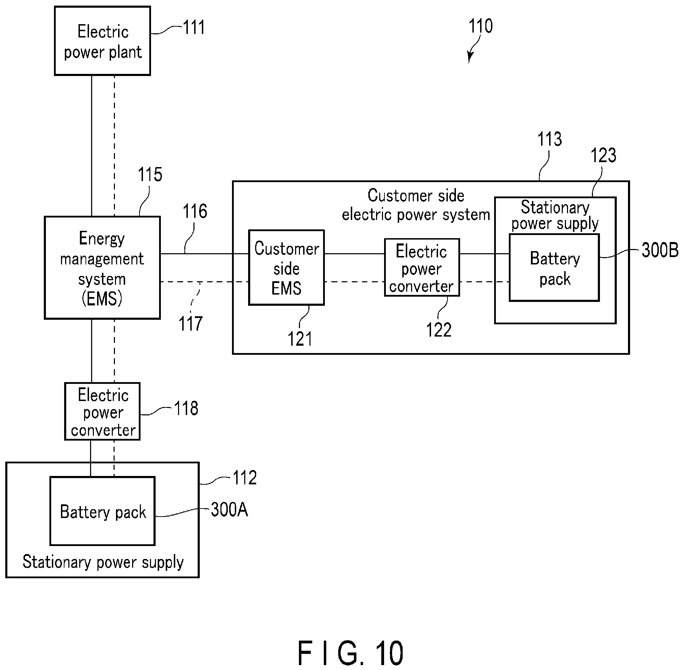

FIG. 10 shows an example of application to stationary power supplies 112 and 123 as an example of use of the battery packs 300A and 300B according to the approach. An example shown in FIG. 10 presents a system 110 which uses the stationary power supplies 112 and 123. The system 110 includes an electric power plant 111, the stationary power supply 112, a customer side electric power system 113, and an energy management system (EMS) 115. An electric power network 116 and a communication network 117 are formed in the system 110, and the electric power plant 111, the stationary power supply 112, the customer side electric power system 113 and the EMS 115 are connected via the electric power network 116 and the communication network 117. The EMS 115 utilizes the electric power network 116 and the communication network 117 to perform control to stabilize the entire system 110.

The electric power plant 111 generates a large amount of electric power from fuel sources such as thermal power and nuclear power. Electric power is supplied from the electric power plant 111 through the electric power network 116 and the like. The battery pack 300A is installed in the stationary power supply 112. The battery pack 300A can store electric power and the like supplied from the electric power plant 111. The stationary power supply 112 can also supply the electric power stored in the battery pack 300A through the electric power network 116 and the like. The system 110 is provided with an electric power converter 118. The electric power converter 118 includes a converter, an inverter, a transformer and the like. Thus, the electric power converter 118 can perform conversion between direct current and alternate current, conversion between alternate currents of different frequencies, voltage transformation (step-up and step-down), and the like. Accordingly, the electric power converter 118 can convert electric power from the electric power plant 111 into electric power that can be stored in the battery pack 300A.

The customer side electric power system 113 includes an electric power system for factories, an electric power system for buildings, an electric power system for home use, and the like. The customer side electric power system 113 includes a customer side EMS 121, an electric power converter 122, and the stationary power supply 123. The battery pack 300B is installed in the stationary power supply 123. The customer side EMS 121 performs control to stabilize the customer side electric power system 113.

Electric power from the electric power plant 111 and electric power from the battery pack 300A are supplied to the customer side electric power system 113 through the electric power network 116. The battery pack 300B can store electric power supplied to the customer side electric power system 113. Similarly to the electric power converter 118, the electric power converter 122 includes a converter, an inverter, a transformer and the like. Thus, the electric power converter 122 can perform conversion between direct current and alternate current, conversion between alternate currents of different frequencies, voltage transformation (step-up and step-down), and the like. Accordingly, the electric power converter 122 can convert electric power supplied to the customer side electric power system 113 into electric power that can be stored in the battery pack 300B.

The electric power stored in the battery pack 300B can be used, for example, for charging a vehicle such as an electric automobile. The system 110 may also be provided with a natural energy source. In this case, the natural energy source generates electric power from natural energy such as wind power and solar light. In addition to the electric power plant 111, electric power is also supplied from the natural energy source through the electric power network 116.

Examples

Examples will be described below, but the approaches are not limited to the examples which will be described below.

<Example 1>

(Fabrication of negative electrode)

As a negative electrode active material, lithium titanate ($Li_4Ti_5O_{12}$: TLO) particles having a spinel structure were used. An average particle size of the $Li_4Ti_5O_{12}$ particles was 1 $\mu$m. Acetylene black was used as an electro-conductive agent. As a negative electrode binder, a first binder obtained by mixing an acrylic resin and a fluorine-based resin was used. A mixing ratio between the acrylic resin and the fluorine-based resin was set so that a proportion of the acrylic resin to the first binder was 20 mass%. As the acrylic resin, an acrylic acid ester polymer was used. PVDF was used as the fluorine-based resin. The negative electrode active material, the electro-conductive agent, and the negative electrode binder were mixed in proportions of 90 mass%, 5 mass%, and 5 mass%, respectively, and dispersed in NMP to prepare a slurry.

The obtained slurry was applied to a nickel foil having a thickness of 10 $\mu$m as a negative electrode current collector, dried, and subjected to a hot-pressing step to fabricate a negative electrode.

(Fabrication of positive electrode)

As a positive electrode active material, lithiummanganese composite oxide ($LiMn_2O_4$: LMO) particles having a spinel structure were used. An average particle size of the $LiMn_2O_4$ particles was 2 $\mu$m. Acetylene black was used as an electro-conductive agent. PVDF was used as a positive electrode binder. The positive electrode active material, the electro-conductive agent, and the positive electrode binder were mixed in proportions of 90 mass%, 5 mass%, and 5 mass%, respectively, and dispersed in NMP to prepare a slurry.

The obtained slurry was applied to both surfaces of a titanium foil having a thickness of 10 $\mu$m as a positive electrode current collector, dried, and subjected to a pressing step to fabricate a positive electrode.

(Preparation of aqueous electrolyte)

Lithium chloride (LiCl) as an electrolyte salt was mixed in a proportion of 1.2 mol per 1 mol of water as an aqueous solvent. Urea was provided as an additive. A mixture of water and lithium chloride and urea were mixed at a weight ratio of 1:3. An aqueous electrolyte was thus prepared.

(Assembly of secondary battery)

A secondary battery was fabricated as follows using the fabricated negative electrode, positive electrode, and aqueous electrolyte.

As a separator, a polyethylene nonwoven fabric having a thickness of 20 $\mu$m was provided. The surface of the positive electrode was covered with the separator, and the negative electrode was put on the positive electrode through the separator so that the negative electrode active material-containing layer was opposed to the positive electrode active material-containing layer with the separator interposed therebetween, which were wound in a spiral shape to fabricate an electrode group. The electrode group was pressed and formed into a flat shape. The electrode group was housed in a thin metal can container made of stainless steel having a thickness of 0.25 mm.

The aqueous electrolyte was injected into the electrode group in the container to prepare a secondary battery.

<Example 2>

In the fabrication of the negative electrode, PVDF was used as the negative electrode binder.

In the fabrication of the positive electrode, a first binder obtained by mixing an acrylic resin and a fluorine-based resin was used as the positive electrode binder. A mixing ratio between the acrylic resin and the fluorine-based resin was set so that a proportion of the acrylic resin to the first binder was 20 mass%. As the acrylic resin, an acrylic acid ester polymer was used. PVDF was used as the fluorine-based resin.

A secondary battery was fabricated in the same manner as in Example 1 except for the above.

<Example 3>

A secondary battery was fabricated in the same manner as in Example 1, except that the negative electrode was fabricated in the same manner as described in Example 1, and the positive electrode was fabricated and used in the same manner as described in Example 2.

<Example 4>

In the fabrication of the positive electrode, lithium phosphate (LiMn$_{0.8}$Fe$_{0.2}$PO$_4$: LMFP) particles having an olivine structure were used as the positive electrode active material. An average particle size of the LMFP particles was 0.8 $\mu$m. As the positive electrode binder, a first binder obtained by mixing an acrylic resin and a fluorine-based resin so that the proportion of the acrylic resin to the first binder was 35 mass% was used.

In the preparation of the aqueous electrolyte, the electrolyte salt was changed to LiTFSI. A secondary battery was fabricated in the same manner as in Example 2 except for the above.

<Example 5>

In the fabrication of the positive electrode, lithium nickel cobalt manganese composite oxide (LiNi$_{0.5}$Co$_{0.2}$Mn$_{0.3}$O$_2$: NCM) particles were used as the positive electrode active material. An average particle size of the NCM particles was 5 um.

In the preparation of the aqueous electrolyte, the electrolyte salt was changed to LiTFSI. A secondary battery was fabricated in the same manner as in Example 3 except for the above.

<Example 6>

A secondary battery was fabricated in the same manner as in Example 5 except that a methacrylic acid ester polymer was used as the acrylic resin in the fabrication of the negative electrode and the fabrication of the positive electrode.

<Example 7>

A secondary battery was fabricated in the same manner as in Example 5 except that an acrylonitrile polymer was used as the acrylic resin in the fabrication of the negative electrode and the fabrication of the positive electrode.

<Example 8>

In the fabrication of the negative electrode, monoclinic niobium titanium oxide ($TiNb_2O_7$: TNO) particles were used as the negative electrode active material. An average particle size of the TNO particles was 1.5 um. As the acrylic resin, an acrylic acid/acrylonitrile mixed polymer (copolymer including acrylic acid and acrylonitrile as monomers) was used.

In the fabrication of the positive electrode, an acrylic acid/acrylonitrile mixed polymer was used as the acrylic resin. A secondary battery was fabricated in the same manner as in Example 5 except for the above.

<Example 9>

In the fabrication of the negative electrode, a first binder obtained by mixing an acrylic resin and a fluorine-based resin so that the proportion of the acrylic resin to the first binder was 5 mass% was used as the negative electrode binder.

In the fabrication of the positive electrode, the LMO particles described in Example 1 were used as the positive electrode active material. As the positive electrode binder, a first binder obtained by mixing an acrylic resin and a fluorine-based resin so that the proportion of the acrylic resin to the first binder was 5 mass% was used. An acrylic acid/acrylonitrile mixed polymer was used as the acrylic resin. A secondary battery was fabricated in the same manner as in Example 8 except for the above.

<Example 10>

In the fabrication of the negative electrode and the fabrication of the positive electrode, a first binder obtained by mixing an acrylic resin and a fluorine-based resin so that the proportion of the acrylic resin to the first binder was 70 mass% was used as the negative electrode binder and the positive electrode binder. A secondary battery was fabricated in the same manner as in Example 9 except for the above.

<Example 11>

In the fabrication of the negative electrode and the fabrication of the positive electrode, a first binder obtained by mixing an acrylic resin and a fluorine-based resin so that the proportion of the acrylic resin to the first binder was 2.5 mass% was used as the negative electrode binder and the positive electrode binder. A secondary battery was fabricated in the same manner as in Example 9 except for the above.

<Example 12>

In the fabrication of the negative electrode and the fabrication of the positive electrode, a first binder obtained by mixing an acrylic resin and a fluorine-based resin so that the proportion of the acrylic resin to the first binder was 95 mass% was used as the negative electrode binder and the positive electrode binder. A secondary battery was fabricated in the same manner as in Example 9 except for the above.

<Example 13>

A secondary battery was fabricated in the same manner as in Example 5 except that an acrylic acid/acrylonitrile mixed polymer was used as the acrylic resin in the fabrication of the negative electrode and the fabrication of the positive electrode.

<Example 14>

In the preparation of the aqueous electrolyte, the electrolyte salt was changed to LiCl. Dimethylsulfone was provided as the additive. A mixture of water and lithium chloride and dimethylsulfone were mixed at a weight ratio of 1:3. A secondary battery was fabricated in the same manner as in Example 13 except for the above.

<Example 15>

In the preparation of the aqueous electrolyte, the electrolyte salt was changed to LiCl. The mixing ratio between water and the electrolyte salt was changed to a ratio of 1 mol of the electrolyte salt per 3 mol of water. In addition, the addition of additives was omitted. A secondary battery was fabricated in the same manner as in Example 13 except for the above.

<Example 16>

In the preparation of the aqueous electrolyte, the electrolyte salt was changed to LiCl. Urea and $ZnCl_2$ were provided as the additives. A mixture of water and lithium chloride and urea were mixed at a weight ratio of 1:3. To the mixed liquid, $ZnCl_2$ was added in a proportion of 0.5 mass% and dissolved. A secondary battery was fabricated in the same manner as in Example 8 except for the above.

<Example 17>

A secondary battery was fabricated in the same manner as in Example 16 except that $ZnCl_2$ was changed to $SnCl_2$ in the preparation of the aqueous electrolyte.

<Example 18>

In the preparation of the aqueous electrolyte, $PbCl_2$ was added instead of $ZnCl_2$. $PbCl_2$ was suspended in an aqueous solvent. A secondary battery was fabricated in the same manner as in Example 16 except for the above.

<Example 19>

In the preparation of the aqueous electrolyte, the mixing ratio between water and the electrolyte salt was changed to a ratio of 1 mol of the electrolyte salt per 3 mol of water. In addition, no additive was added. A secondary battery was fabricated in the same manner as in Example 16 except for the above.

<Comparative Example 1>

In the fabrication of the negative electrode and the fabrication of the positive electrode, PVDF was used as the negative electrode binder and the positive electrode binder. A secondary battery was fabricated in the same manner as in Example 8 except for the above.

<Comparative Example 2>

In the fabrication of the negative electrode and the fabrication of the positive electrode, an acrylic acid/acrylonitrile mixed polymer was used as the negative electrode binder and the positive electrode binder. A secondary battery was fabricated in the same manner as in Example 8 except for the above.

<Comparative Example 3>

In the fabrication of the positive electrode, the LMFP particles described in Example 4 were used as the positive electrode active material. A secondary battery was fabricated in the same manner as in Comparative Example 1 except for the above.

The secondary battery fabricated in each of the Examples and the Comparative Examples was initially charged. The initial charge was performed at a constant current of 0.1 C at 45°C.

Tables 1 and 2 show design of the negative electrode, Tables 3 and 4 show design of the positive electrode, and Table 5 shows a composition of the aqueous electrolyte in each of the Examples and the Comparative Examples.

Table 1

| | Type of negative electrode active material | Type of fluorine-based resin | Type of acrylic resin | Proportion (mass%) of acrylic resin to first binder |
|---|---|---|---|---|
| Example 1 | $Li_4Ti_5O_{12}$ | PVDF | Acrylic acid ester polymer | 20 |
| Example 2 | $Li_4Ti_5O_{12}$ | PVDF | - | 0 |
| Example 3 | $Li_4Ti_5O_{12}$ | PVDF | Acrylic acid ester polymer | 20 |
| Example 4 | $Li_4Ti_5O_{12}$ | PVDF | - | 0 |
| Example 5 | $Li_4Ti_5O_{12}$ | PVDF | Acrylic acid ester polymer | 20 |
| Example 6 | $Li_4Ti_5O_{12}$ | PVDF | Methacrylic acid ester polymer | 20 |
| Example 7 | $Li_4Ti_5O_{12}$ | PVDF | Acrylonitrile polymer | 20 |
| Example 8 | $TiNb_2O_7$ | PVDF | Acrylic acid/ acrylonitrile mixed polymer | 20 |
| Example 9 | $TiNb_2O_7$ | PVDF | Acrylic acid/ acrylonitrile mixed polymer | 5 |
| Example 10 | $TiNb_2O_7$ | PVDF | Acrylic acid/ acrylonitrile mixed polymer | 70 |
| Example 11 | $TiNb_2O_7$ | PVDF | Acrylic acid/ acrylonitrile mixed polymer | 2.5 |

Table 2

| | Type of negative electrode active material | Type of fluorine-based resin | Type of acrylic resin | Proportion (mass%) of acrylic resin to first binder |
|---|---|---|---|---|
| Example 12 | $TiNb_2O_7$ | PVDF | Acrylic acid/ acrylonitrile mixed polymer | 95 |
| Example 13 | $Li_4Ti_5O_{12}$ | PVDF | Acrylic acid/ acrylonitrile mixed polymer | 20 |
| Example 14 | $Li_4Ti_5O_{12}$ | PVDF | Acrylic acid/ acrylonitrile mixed polymer | 20 |
| Example 15 | $Li_4Ti_5O_{12}$ | PVDF | Acrylic acid/ acrylonitrile mixed polymer | 20 |

(continued)

| | Type of negative electrode active material | Type of fluorine-based resin | Type of acrylic resin | Proportion (mass%) of acrylic resin to first binder |
|---|---|---|---|---|
| Example 16 | $TiNb_2O_7$ | PVDF | Acrylic acid/ acrylonitrile mixed polymer | 20 |
| Example 17 | $TiNb_2O_7$ | PVDF | Acrylic acid/ acrylonitrile mixed polymer | 20 |
| Example 18 | $TiNb_2O_7$ | PVDF | Acrylic acid/ acrylonitrile mixed polymer | 20 |
| Example 19 | $TiNb_2O_7$ | PVDF | Acrylic acid/ acrylonitrile mixed polymer | 20 |
| Comparative Example 1 | $TiNb_2O_7$ | PVDF | - | 0 |
| Comparative Example 2 | $TiNb_2O_7$ | - | Acrylic acid/ acrylonitrile mixed polymer | 100 |
| Comparative Example 3 | $TiNb_2O_7$ | PVDF | - | 0 |

Table 3

| | Type of positive electrode active material | Type of fluorine-based resin | Type of acrylic resin | Proportion (mass%) of acrylic resin to first binder |
|---|---|---|---|---|
| Example 1 | $LiMn_2O_4$ | PVDF | - | 0 |
| Example 2 | $LiMn_2O_4$ | PVDF | Acrylic acid ester polymer | 20 |
| Example 3 | $LiMn_2O_4$ | PVDF | Acrylic acid ester polymer | 20 |
| Example 4 | $LiMn_{0.8}Fe_{0.2}PO_4$ | PVDF | Acrylic acid ester polymer | 35 |
| Example 5 | $LiNi_{0.5}Co_{0.2}Mn_{0.3}O_2$ | PVDF | Acrylic acid ester polymer | 20 |
| Example 6 | $LiNi_{0.5}Co_{0.2}Mn_{0.3}O_2$ | PVDF | Methacrylic acid ester polymer | 20 |
| Example 7 | $LiNi_{0.5}Co_{0.2}Mn_{0.3}O_2$ | PVDF | Acrylonitrile polymer | 20 |
| Example 8 | $LiNi_{0.5}Co_{0.2}Mn_{0.3}O_2$ | PVDF | Acrylic acid/acrylonitrile mixed polymer | 20 |
| Example 9 | $LiMn_2O_4$ | PVDF | Acrylic acid/acrylonitrile mixed polymer | 5 |
| Example 10 | $LiMn_2O_4$ | PVDF | Acrylic acid/acrylonitrile mixed polymer | 70 |

(continued)

| | Type of positive electrode active material | Type of fluorine-based resin | Type of acrylic resin | Proportion (mass%) of acrylic resin to first binder |
|---|---|---|---|---|
| Example 11 | $LiMn_2O_4$ | PVDF | Acrylic acid/acrylonitrile mixed polymer | 2.5 |

Table 4

| | Type of positive electrode active material | Type of fluorine-based resin | Type of acrylic resin | Proportion (mass%) of acrylic resin to first binder |
|---|---|---|---|---|
| Example 12 | $LiMn_2O_4$ | PVDF | Acrylic acid/acrylonitrile mixed polymer | 95 |
| Example 13 | $LiNi_{0.5}Co_{0.2}Mn_{0.3}O_2$ | PVDF | Acrylic acid/acrylonitrile mixed polymer | 20 |
| Example 14 | $LiNi_{0.5}CO_{0.2}Mn_{0.3}O_2$ | PVDF | Acrylic acid/acrylonitrile mixed polymer | 20 |
| Example 15 | $LiNi_{0.5}Co_{0.2}Mn_{0.3}O_2$ | PVDF | Acrylic acid/acrylonitrile mixed polymer | 20 |
| Example 16 | $LiNi_{0.5}Co_{0.2}Mn_{0.3}O_2$ | PVDF | Acrylic acid/acrylonitrile mixed polymer | 20 |
| Example 17 | $LiNi_{0.5}Co_{0.2}Mn_{0.3}O_2$ | PVDF | Acrylic acid/acrylonitrile mixed polymer | 20 |
| Example 18 | $LiNi_{0.5}Co_{0.2}Mn_{0.3}O_2$ | PVDF | Acrylic acid/acrylonitrile mixed polymer | 20 |
| Example 19 | $LiNi_{0.5}Co_{0.2}Mn_{0.3}O_2$ | PVDF | Acrylic acid/acrylonitrile mixed polymer | 20 |
| Comparative Example 1 | $LiNi_{0.5}Co_{0.2}Mn_{0.3}O_2$ | PVDF | - | 0 |
| Comparative Example 2 | $LiNi_{0.5}Co_{0.2}Mn_{0.3}O_2$ | - | Acrylic acid/acrylonitrile mixed polymer | 100 |
| Comparative Example 3 | $LiMn_{0.8}Fe_{0.2}PO_4$ | PVDF | - | 0 |

Table 5

| | Type of electrolyte salt | Type of Additive |
|---|---|---|
| Example 1 | LiCl | Urea |
| Example 2 | LiCl | Urea |

(continued)

|  | Type of electrolyte salt | Type of Additive |
|---|---|---|
| Example 3 | LiCl | Urea |
| Example 4 | LiTFSI | Urea |
| Example 5 | LiTFSI | Urea |
| Example 6 | LiTFSI | Urea |
| Example 7 | LiTFSI | Urea |
| Example 8 | LiTFSI | Urea |
| Example 9 | LiTFSI | Urea |
| Example 10 | LiTFSI | Urea |
| Example 11 | LiTFSI | Urea |
| Example 12 | LiTFSI | Urea |
| Example 13 | LiTFSI | Urea |
| Example 14 | LiCl | Dimethylsulfone |
| Example 15 | LiTFSI | - |
| Example 16 | LiCl | $ZnCl_2$, Urea |
| Example 17 | LiCl | $SnCl_2$, Urea |
| Example 18 | LiCl | $PbCl_2$ (suspended), Urea |
| Example 19 | LiCl | - |
| Comparative Example 1 | LiTFSI | Urea |
| Comparative Example 2 | LiTFSI | Urea |
| Comparative Example 3 | LiTFSI | Urea |

<Identification of type of film>

FT-IR analysis and XPS analysis were performed on the positive electrode and negative electrode included in each of the batteries of the Examples and the Comparative Examples after the initial charge by the above-described methods.

From the XPS analysis results for the electrodes included in each of the Examples and the Comparative Examples, the $A_O$, $A_F$, $A_N$, and $A_F/(A_F+A_O+2A_N)$ values were obtained by the above-described methods. The values obtained for the negative electrode are shown in Table 6. The values obtained for the positive electrode are shown in Table 7.

Table 6

|  | $A_O$ | $A_F$ | $A_N$ | $A_F/(A_F+A_O+2A_N)$ |
|---|---|---|---|---|
| Example 1 | 25 | 75 | 0 | 0.75 |
| Example 2 | 0 | 100 | 0 | 1.00 |
| Example 3 | 25 | 75 | 0 | 0.75 |
| Example 4 | 0 | 100 | 0 | 1.00 |
| Example 5 | 25 | 75 | 0 | 0.75 |
| Example 6 | 25 | 75 | 0 | 0.75 |
| Example 7 | 0 | 70 | 30 | 0.54 |
| Example 8 | 15 | 70 | 15 | 0.61 |

(continued)

|  | $A_O$ | $A_F$ | $A_N$ | $A_F/(A_F+A_O+2A_N)$ |
|---|---|---|---|---|
| Example 9 | 5 | 90 | 5 | 0.88 |
| Example 10 | 40 | 20 | 40 | 0.14 |
| Example 11 | 2 | 96 | 2 | 0.94 |
| Example 12 | 46 | 8 | 46 | 0.05 |
| Example 13 | 15 | 70 | 15 | 0.61 |
| Example 14 | 15 | 70 | 15 | 0.61 |
| Example 15 | 15 | 70 | 15 | 0.61 |
| Example 16 | 15 | 70 | 15 | 0.61 |
| Example 17 | 15 | 70 | 15 | 0.61 |
| Example 18 | 15 | 70 | 15 | 0.61 |
| Example 19 | 15 | 70 | 15 | 0.61 |
| Comparative Example 1 | 0 | 100 | 0 | 1.00 |
| Comparative Example 2 | 50 | 0 | 50 | 0.00 |
| Comparative Example 3 | 0 | 100 | 0 | 1.00 |

Table 7

|  | $A_O$ | $A_F$ | $A_N$ | $A_F/(A_F+A_O+2A_N)$ |
|---|---|---|---|---|
| Example 1 | 0 | 100 | 0 | 1.00 |
| Example 2 | 25 | 75 | 0 | 0.75 |
| Example 3 | 25 | 75 | 0 | 0.75 |
| Example 4 | 43 | 57 | 0 | 0.57 |
| Example 5 | 25 | 75 | 0 | 0.75 |
| Example 6 | 25 | 75 | 0 | 0.75 |
| Example 7 | 0 | 70 | 30 | 0.54 |
| Example 8 | 15 | 70 | 15 | 0.61 |
| Example 9 | 5 | 90 | 5 | 0.88 |
| Example 10 | 40 | 20 | 40 | 0.14 |
| Example 11 | 2 | 96 | 2 | 0.94 |
| Example 12 | 46 | 8 | 46 | 0.05 |
| Example 13 | 15 | 70 | 15 | 0.61 |
| Example 14 | 15 | 70 | 15 | 0.61 |
| Example 15 | 15 | 70 | 15 | 0.61 |
| Example 16 | 15 | 70 | 15 | 0.61 |
| Example 17 | 15 | 70 | 15 | 0.61 |
| Example 18 | 15 | 70 | 15 | 0.61 |
| Example 19 | 15 | 70 | 15 | 0.61 |
| Comparative Example 1 | 0 | 100 | 0 | 1.00 |

(continued)

|  | $A_O$ | $A_F$ | $A_N$ | $A_F/(A_F+A_O+2A_N)$ |
|---|---|---|---|---|
| Comparative Example 2 | 50 | 0 | 50 | 0.00 |
| Comparative Example 3 | 0 | 100 | 0 | 1.00 |

From the FT-IR analysis results and XPS analysis results for the electrodes included in each of the Examples and the Comparative Examples after the initial charge, components contained in the film formed on the electrode were identified by the above-described method. The types of the films formed on the negative electrode and the positive electrode included in each of the Examples and the Comparative Examples are shown in Table 8 and Table 9.

Table 8

|  | Type of film of negative electrode | Type of film of positive electrode |
|---|---|---|
| Example 1 | Lithium isocyanate | Similar to that of negative electrode |
| Example 2 | Lithium isocyanate | Similar to that of negative electrode |
| Example 3 | Lithium isocyanate | Similar to that of negative electrode |
| Example 4 | Lithium isocyanate/lithium fluoride/lithium oxide/lithium sulfite/lithium sulfate | Similar to that of negative electrode |
| Example 5 | Lithium isocyanate/lithium fluoride/lithium oxide/lithium sulfite/lithium sulfate | Similar to that of negative electrode |
| Example 6 | Lithium isocyanate/lithium fluoride/lithium oxide/lithium sulfite/lithium sulfate | Similar to that of negative electrode |
| Example 7 | Lithium isocyanate/lithium fluoride/lithium oxide/lithium sulfite/lithium sulfate | Similar to that of negative electrode |
| Example 8 | Lithium isocyanate/lithium fluoride/lithium oxide/lithium sulfite/lithium sulfate | Similar to that of negative electrode |
| Example 9 | Lithium isocyanate/lithium fluoride/lithium oxide/lithium sulfite/lithium sulfate | Similar to that of negative electrode |
| Example 10 | Lithium isocyanate/lithium fluoride/lithium oxide/lithium sulfite/lithium sulfate | Similar to that of negative electrode |
| Example 11 | Lithium isocyanate/lithium fluoride/lithium oxide/lithium sulfite/lithium sulfate | Similar to that of negative electrode |

Table 9

|  | Type of film of negative electrode | Type of film of positive electrode |
|---|---|---|
| Example 12 | Lithium isocyanate/lithium fluoride/lithium oxide/lithium sulfite/lithium sulfate | Similar to that of negative electrode |
| Example 13 | Lithium isocyanate/lithium fluoride/lithium oxide/lithium sulfite/lithium sulfate | Similar to that of negative electrode |
| Example 14 | Lithium sulfate/lithium sulfite | Similar to that of negative electrode |

(continued)

|  | Type of film of negative electrode | Type of film of positive electrode |
|---|---|---|
| Example 15 | Lithium fluoride/lithium oxide/lithium sulfite/lithium sulfate | Similar to that of negative electrode |
| Example 16 | Metal zinc/zinc oxide/zinc hydroxide/Lithium isocyanate | Lithium isocyanate |
| Example 17 | Metal tin/Lithium isocyanate | Lithium isocyanate |
| Example 18 | Metal lead/Lithium isocyanate | Lithium isocyanate |
| Example 19 | None | None |
| Comparative Example 1 | Lithium isocyanate/lithium fluoride/lithium oxide/lithium sulfite/lithium sulfate | Similar to that of negative electrode |
| Comparative Example 2 | Lithium isocyanate/lithium fluoride/lithium oxide/lithium sulfite/lithium sulfate | Similar to that of negative electrode |
| Comparative Example 3 | Lithium isocyanate/lithium fluoride/lithium oxide/lithium sulfite/lithium sulfate | Similar to that of negative electrode |

<Performance evaluation>

The performance evaluation of the secondary battery according to each of the Examples and the Comparative Examples was performed as follows.

(1 C cycle average efficiency)

A 1 C cycle average efficiency was measured as follows. After constant current charge at 1 C, constant current discharge at 1 C was performed. The charge and discharge were defined as one cycle. A charge capacity and a discharge capacity were measured at the time of each of charge and discharge. A value obtained by dividing the discharge capacity by the charge capacity and multiplying the obtained value by 100 was defined as coulombic efficiency. A total of 100 cycles of the above charge and discharge were repeated, and the coulombic efficiency was measured for each of the 100 cycles. An average value of the coulombic efficiencies for the 100 cycles was defined as 1 C cycle average efficiency (%).

(Resistance increase rate)

A resistance increase rate was measured as follows. In the same manner as in the 1 C cycle average efficiency measurement described above, 100 cycles of charge and discharge were performed. An average discharge voltage was measured at the time of each of discharge in the first cycle and discharge in the 100th cycle. In addition, constant current discharge at 0.05 C was performed using another cell having the same configuration, and an average discharge voltage Va at 0.05 C was measured. Using Va, an average discharge voltage $V_1$ in the first cycle, and an average discharge voltage $V_{100}$ in the 100th cycle, a rate of change in resistance was determined by the following equation, and defined as resistance increase rate (%).

```
Math 1
```

$$(\text{Resistance increase rate}) = (V_1 - V_{100})/(Va - V_1) \times 100$$

The measurement results of the 1 C cycle average efficiency and the resistance increase rate of each of the Examples and the Comparative Examples are shown in Table 10.

<Result>

Table 10

| | 1 C Cycle average efficiency (%) | Resistance increase rate (%) |
|---|---|---|
| Example 1 | 99.82 | 0.62 |
| Example 2 | 99.75 | 1.08 |
| Example 3 | 99.89 | 0.82 |
| Example 4 | 99.28 | 1.25 |
| Example 5 | 99.92 | 1.22 |
| Example 6 | 99.91 | 1.08 |
| Example 7 | 99.93 | 1.0 |
| Example 8 | 99.95 | 0.80 |
| Example 9 | 99.62 | 0.72 |
| Example 10 | 99.97 | 1.02 |
| Example 11 | 99.04 | 0.90 |
| Example 12 | 99.97 | 4.80 |
| Example 13 | 99.94 | 0.81 |
| Example 14 | 99.95 | 0.85 |
| Example 15 | 99.80 | 0.62 |
| Example 16 | 99.93 | 0.88 |
| Example 17 | 99.95 | 0.88 |
| Example 18 | 99.92 | 0.98 |
| Example 19 | 98.92 | 0.98 |
| Comparative Example 1 | 97.21 | 3.21 |
| Comparative Example 2 | 99.21 | 12.5 |
| Comparative Example 3 | 92.10 | 102 |

All of the secondary batteries according to the Examples had a high 1 C cycle average efficiency and a low resistance increase rate. Therefore, it has become clear that the secondary batteries are excellent in cycle life performance.

In Example 1, only the negative electrode contains the first binder including a fluorine-based resin and an acrylic resin. In Example 2, only the positive electrode contains the first binder. In Example 3, both the negative electrode and the positive electrode contain the first binder. Based on a comparison among these Examples, Example 3 showed a higher 1 C cycle average efficiency and a lower resistance increase rate than those of Examples 1 and 2. Therefore, it has become clear that the cycle life performance can be further improved in a case where both the negative electrode and the positive electrode contain the first binder.

Comparative Example 1 is a comparative example including NCM as the positive electrode active material and including PVDF alone as the positive electrode binder. Comparative Example 3 is the same as Comparative Example 1 except that LMFP is included as the positive electrode active material. Comparative Example 3 showed a lower 1 C cycle average efficiency and a higher resistance increase rate than those of Comparative Example 1. This is considered to be because LMFP is a positive electrode active material that tends to cause side reactions as compared with NCM.

Example 4 is a secondary battery using a positive electrode including LMFP as the positive electrode active material, like Comparative Example 3. Example 4 containing the first binder including a fluorine-based resin and an acrylic resin showed a higher 1 C cycle average efficiency and a lower resistance increase rate than those of Comparative Example 3. Therefore, it has become clear that the cycle life performance can be improved even in a case where a secondary battery is fabricated by combining the first binder including a fluorine-based resin and an acrylic resin with the positive electrode active material that tends to cause a side reaction.

Examples 5 to 7 and 13 are secondary batteries fabricated under the same conditions except that the types of the acrylic resins included in the first binders are different from each other. All of the secondary batteries had a high 1 C cycle average efficiency and a low resistance increase rate than those of the Comparative Examples. Therefore, it has become clear that the cycle life performance can be improved even in a case where the secondary battery includes any of an acrylic acid ester polymer, a methacrylic acid ester polymer, an acrylonitrile polymer, and an acrylic acid/acrylonitrile mixed polymer as the acrylic resin.

Examples 8 and 13 are secondary batteries fabricated under the same conditions except that the negative electrode active materials are TNO and TLO, respectively. All of the secondary batteries had a high 1 C cycle average efficiency and a low resistance increase rate than those of the Comparative Examples. Therefore, it has become clear that the cycle life performance can be improved even when the secondary battery includes either TNO or TLO as the negative electrode active material.

Examples 9 to 12 are secondary batteries fabricated under the same conditions except that the proportions of the acrylic resins to the first binders are different from each other. Examples 9 and 10 in which the proportion of the acrylic resin to the first binder was in a range of 5 mass% or more and 70 mass% or less tended to show a higher 1 C cycle average efficiency than that of Example 11 in which the proportion of the acrylic resin to the first binder was less than 5 mass%. In addition, Examples 9 and 10 tended to show a lower resistance increase rate than that of Example 12 in which the proportion of the acrylic resin to the first binder was higher than 70 mass%. Therefore, it has become clear that the secondary battery in which the proportion of the acrylic resin to the first binder is in the range of 5 mass% or more and 70 mass% or less is particularly excellent in cycle life performance.

Further, based on a comparison between Examples 9 to 12 in which the proportions of the acrylic resins to the first binders were different, and Comparative Example 1 including no acrylic resin and Comparative Example 2 including no fluorine-based resin, it has become clear that the $A_F/(A_F+A_O+2A_N)$ value tended to decrease as the proportion of the acrylic resin to the total proportion of the fluorine-based resin and the acrylic resin increased. Examples 9 to 12 in which $A_F$, $A_O$, and $A_N$ satisfied $0.01 \leq A_F/(A_F+A_O+2A_N) \leq 0.95$ all showed a higher 1 C cycle average efficiency than that of Comparative Example 1 in which $A_F/(A_F+A_O+2A_N)$ was larger than 0.95. Also, Examples 9 to 12 all showed a lower resistance increase rate than that of Comparative Example 2 in which $A_F/(A_F+A_O+2A_N)$ was less than 0.01. Therefore, it has become clear that the secondary battery in which $A_F$, $A_O$, and $A_N$ satisfy $0.01 \leq A_F/(A_F+A_O+2A_N) \leq 0.95$ is particularly excellent in cycle life performance.

In addition, Examples 1 to 8 and 13 to 19 including the electrode in which $A_F$, $A_O$, and $A_N$ satisfy $0.5 \leq A_F/(A_F+A_O+2A_N) \leq 0.8$ tended to show a higher 1 C cycle average efficiency than those of Examples 9 and 11 and Comparative Examples 1 and 3 in which $A_F/(A_F+A_O+2A_N)$ was larger than 0.8. In addition, Examples 1 to 8 and 13 to 19 tended to show a lower resistance increase rate than those of Examples 10 and 12 and Comparative Example 2 in which $A_F/(A_F+A_O+2A_N)$ was smaller than 0.5. Therefore, it has become clear that the secondary battery in which $A_F$, $A_O$, and $A_N$ satisfy $0.5 \leq A_F/(A_F+A_O+2A_N) \leq 0.8$ is particularly excellent in cycle life performance.

Example 15 is a secondary battery similar to that of Example 13 except that an aqueous electrolyte including no urea as an additive was used as the aqueous electrolyte. Example 15 showed a high 1 C cycle average efficiency and a low resistance increase rate, although the addition of additives was omitted. This is considered to be because, in Example 15, LiTFSI contained in the aqueous electrolyte was decomposed to form a film containing lithium fluoride, lithium oxide, lithium sulfite, and lithium sulfate.

Examples 16 to 18 are secondary batteries fabricated in the same manner except that the types of additives added to the aqueous electrolytes are different from each other. Example 19 is a secondary battery fabricated in the same manner as in Examples 16 to 18 except that an aqueous electrolyte including no urea as the additive was used as the aqueous electrolyte.

films including a metal element contained in the additive were formed on the surfaces of the negative electrodes of Examples 16 to 18. The film further included lithium isocyanate. The surface of the negative electrode of Example 16 included metal zinc, zinc oxide, and zinc hydroxide. The surface of the negative electrode of Example 17 included metal tin. The surface of the negative electrode of Example 18 included metal lead.

No film was formed on the electrode of Example 19.

Examples 16 to 18 tended to show a lower resistance increase rate than that of Example 19.

In addition, based on a comparison between Example 8 and Example 19 fabricated in the same manner except that aqueous electrolytes having different compositions were used, Example 8 tended to show a high 1 C cycle average efficiency and a low resistance increase rate. A film including lithium isocyanate, lithium fluoride, lithium oxide, lithium sulfite, and lithium sulfate was formed on the surface of the electrode included in Example 8.

Based on a comparison between Examples 8 and 16 to 18 and Example 19 described above, it has become clear that the secondary battery in which the negative electrode includes the first binder and the surface of the negative electrode includes at least one selected from the group consisting of cyanates, sulfuric acid salts, metal zinc, metal tin, metal lead, lithium fluoride, lithium oxide, zinc oxide, and zinc hydroxide has a particularly excellent resistance increase suppressing effect.

Comparison is made between Examples 1 to 3, 14, and 16 to 18 and Example 19 in which the aqueous electrolyte includes LiCl as the electrolyte salt. Examples 1 to 3 further contains urea as an amide compound as the additive. Example 14 further contains dimethylsulfone, which is an organic sulfur compound, as the additive. Example 16 further contains $ZnCl_2$, which is a salt including Zn as the additive. Example 17 further contains $SnCl_2$, which is a salt including Sn as the additive. Example 18 further contains $PbCl_2$, which is a salt including Pb as the additive. Example 19 does not contain additives.

Based on a comparison among these Examples, Examples 1 to 3, 14 and 16 to 18 tended to show a higher 1 C cycle average efficiency than that of Example 19. Therefore, it has become clear that particularly excellent cycle life performance can be achieved in a case where the aqueous electrolyte includes at least one selected from the group consisting of an amide compound, an organic sulfur compound, and a salt including at least one element selected from the group consisting of Zn, Sn, and Pb.

According to at least one of the embodiments described above, a secondary battery is provided. The secondary battery includes an aqueous electrolyte, a positive electrode, and a negative electrode. At least one of the positive electrode or the negative electrode includes a first binder. The first binder includes a fluorine-based resin and an acrylic resin. Therefore, the secondary battery can achieve excellent cycle life performance.

Hereinafter, the inventions according to the approaches will be additionally described.

<1> A secondary battery including: an aqueous electrolyte; a positive electrode; and a negative electrode, wherein

at least one of the positive electrode or the negative electrode includes a first binder, and
the first binder includes a fluorine-based resin and an acrylic resin.

<2> The secondary battery according to clause <1>, wherein
the first binder satisfies the following formula (1):

$$0.01 \leq A_F / (A_F + A_O + 2A_N) \leq 0.95 \quad (1)$$

wherein the $A_O$ is an amount of an oxygen atom, the $A_F$ is an amount of a fluorine atom, the $A_N$ is an amount of a nitrogen atom, $A_O + A_N > 0$, and $A_F > 0$.

<3> The secondary battery according to clause <1> or <2>, wherein the acrylic resin is a polymer including at least one selected from the group consisting of an acrylic acid ester, a methacrylic acid ester, and acrylonitrile.

<4> The secondary battery according to any one of clauses <1> to <3>, wherein an X-ray photoelectron spectroscopic spectrum of a surface of the at least one of the positive electrode or the negative electrode has a peak within a range of 292 eV or more and 294 eV or less.

<5> The secondary battery according to any one of clauses <1> to <4>, wherein the fluorine-based resin is a polymer including vinylidene fluoride.

<6> The secondary battery according to any one of clauses <1> to <5>, wherein an X-ray photoelectron spectroscopic spectrum of a surface of the at least one of the positive electrode or the negative electrode has a peak within a range of 398 eV or more and 402 eV or less.

<7> The secondary battery according to any one of clauses <1> to <6>, wherein an X-ray photoelectron spectroscopic spectrum of a surface of the at least one of the positive electrode or the negative electrode has a peak within a range of 168 eV or more and 173 eV or less.

<8> The secondary battery according to any one of clauses <1> to <7>, wherein the aqueous electrolyte includes at least one selected from the group consisting of an amide compound, an organic sulfur compound, and a salt including at least one element selected from the group consisting of Zn, Sn, and Pb.

<9> The secondary battery according to any one of clauses <1> to <8>, wherein

the negative electrode includes the first binder as a negative electrode binder, and
a surface of the negative electrode includes at least one selected from the group consisting of cyanates, sulfuric acid salts, metal zinc, metal tin, metal lead, lithium fluoride, lithium oxide, zinc oxide, and zinc hydroxide.

<10> The secondary battery according to any one of clauses <1> to <9>, wherein
the positive electrode includes:

at least one positive electrode active material selected from the group consisting of lithium manganese composite oxides, lithium phosphorus oxides having an olivine structure, and lithium nickel cobalt manganese composite oxides; and

the first binder as a positive electrode binder.

<11> The secondary battery according to any one of clauses <1> to <10>, wherein
the negative electrode includes:

at least one negative electrode active material selected from the group consisting of lithium titanate having a spinel structure and monoclinic niobium titanium oxide; and
the first binder as a negative electrode binder.

<12> A battery pack including the secondary battery according to any one of clauses <1> to <11>.
<13> The battery pack according to clause <12>, further including:

an external power distribution terminal; and
a protective circuit.

<14> The battery pack according to clause <12> or <13>, further including a plurality of the secondary battery, the plurality of the secondary battery being electrically connected in series, in parallel, or in a combination of in series and in parallel.
<15> A vehicle including the battery pack according to any one of clauses <12> to <14>.
<16> The vehicle according to clause <15>, including a mechanism that converts kinetic energy of the vehicle into regenerative energy.
<17> A stationary power source comprising the battery pack according to any one of clauses <12> to <14>.

While certain approaches have been described, these approaches have been presented by way of example only, and are not intended to limit the scope of the inventions. Indeed, the novel approaches described herein may be embodied in a variety of other forms; furthermore, various omissions, substitutions and changes in the form of the approaches described herein may be made without departing from the spirit of the inventions. The accompanying claims and their equivalents are intended to cover such forms or modifications as would fall within the scope and spirit of the inventions.

## Claims

1. A secondary battery (100) comprising: an aqueous electrolyte; a positive electrode (5); and a negative electrode (3), wherein

at least one of the positive electrode (5) or the negative electrode (3) comprises a first binder, and
the first binder comprises a fluorine-based resin and an acrylic resin.

2. The secondary battery (100) according to claim 1,
wherein
the first binder satisfies the following formula (1):

$$0.01 \leq A_F / (A_F + A_O + 2A_N) \leq 0.95 \quad (1)$$

wherein the $A_O$ is an amount of an oxygen atom, the $A_F$ is an amount of a fluorine atom, the $A_N$ is an amount of a nitrogen atom, $A_O + A_N > 0$, and $A_F > 0$.

3. The secondary battery (100) according to claim 1 or 2, wherein the acrylic resin is a polymer comprising at least one selected from the group consisting of an acrylic acid ester, a methacrylic acid ester, and acrylonitrile.

4. The secondary battery (100) according to any one of claims 1 to 3, wherein an X-ray photoelectron spectroscopic spectrum of a surface of the at least one of the positive electrode (5) or the negative electrode (3) has a peak within a range of 292 eV or more and 294 eV or less.

5. The secondary battery (100) according to any one of claims 1 to 4, wherein the fluorine-based resin is a polymer comprising vinylidene fluoride.

6. The secondary battery (100) according to any one of claims 1 to 5, wherein an X-ray photoelectron spectroscopic spectrum of a surface of the at least one of the positive electrode (5) or the negative electrode (3) has a peak within a range of 398 eV or more and 402 eV or less.

7. The secondary battery (100) according to any one of claims 1 to 6, wherein an X-ray photoelectron spectroscopic spectrum of a surface of the at least one of the positive electrode (5) or the negative electrode (3) has a peak within a range of 168 eV or more and 173 eV or less.

8. The secondary battery (100) according to any one of claims 1 to 7, wherein the aqueous electrolyte comprises at least one selected from the group consisting of an amide compound, an organic sulfur compound, and a salt comprising at least one element selected from the group consisting of Zn, Sn, and Pb.

9. The secondary battery (100) according to any one of claims 1 to 8, wherein

   the negative electrode (3) comprises the first binder as a negative electrode binder, and
   a surface of the negative electrode (3) comprises at least one selected from the group consisting of cyanates, sulfuric acid salts, metal zinc, metal tin, metal lead, lithium fluoride, lithium oxide, zinc oxide, and zinc hydroxide.

10. The secondary battery (100) according to any one of claims 1 to 9, wherein the positive electrode (5) comprises:

    at least one positive electrode active material selected from the group consisting of lithium manganese composite oxides, lithium phosphorus oxides having an olivine structure, and lithium nickel cobalt manganese composite oxides; and
    the first binder as a positive electrode binder.

11. The secondary battery (100) according to any one of claims 1 to 10, wherein the negative electrode (3) comprises:

    at least one negative electrode active material selected from the group consisting of lithium titanate having a spinel structure and monoclinic niobium titanium oxide; and
    the first binder as a negative electrode binder.

12. A battery pack (300) comprising the secondary battery (100) according to any one of claims 1 to 11.

13. The battery pack (300) according to claim 12, further comprising:

    an external power distribution terminal (350); and
    a protective circuit (346).

14. The battery pack (300) according to claim 12 or 13, further comprising a plurality of the secondary battery (100), the plurality of the secondary battery (100) being electrically connected in series, in parallel, or in a combination of in series and in parallel.

15. A vehicle (400) comprising the battery pack (300) according to any one of claims 12 to 14.

16. The vehicle (400) according to claim 15, comprising a mechanism that converts kinetic energy of the vehicle (400) into regenerative energy.

17. A stationary power source comprising the battery pack according to any one of claims 12 to 14.

F I G. 1

F I G. 2

F I G. 3

F I G. 4

F I G. 5

F I G. 6

F I G. 7

F I G. 8

FIG. 9

F I G. 10

Europäisches
Patentamt

European
Patent Office

Office européen
des brevets

# EUROPEAN SEARCH REPORT

Application Number

EP 23 19 4668

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 203 961 A (HENGFEN GUANGZHOU GAOKE POWER ENERGY CO LTD) 18 March 2022 (2022-03-18) | 1-5,10, 12,15,17 | INV. H01M4/04 H01M4/62 |
| A | * paragraph [0059]; claim 1; examples * | 6-9,11, 13,14,16 | H01M10/0525 H01M4/131 H01M4/1391 |
| X | JP 2006 253157 A (HITACHI MAXELL) 21 September 2006 (2006-09-21) | 1-5,10, 12,15,17 | |
| A | * claim 1; examples * | 6-9,11, 13,14,16 | |
| X | CN 1 472 839 A (WEIYOU CHEMICAL INDUSTRY IND C [CN]) 4 February 2004 (2004-02-04) | 1-5,10, 12,15,17 | |
| A | * claim 1; examples * | 6-9,11, 13,14,16 | |
| A | US 2019/288330 A1 (SASAKAWA TETSUYA [JP] ET AL) 19 September 2019 (2019-09-19) * paragraphs [0095] - [0099]; examples * | 1-17 | |

TECHNICAL FIELDS SEARCHED (IPC)

H01M

The present search report has been drawn up for all claims

| Place of search | Date of completion of the search | Examiner |
|---|---|---|
| Munich | 21 February 2024 | Duval, Monica |

EPO FORM 1503 03.82 (P04C01)

## ANNEX TO THE EUROPEAN SEARCH REPORT
## ON EUROPEAN PATENT APPLICATION NO.

EP 23 19 4668

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2024

| Patent document cited in search report | | Publication date | Patent family member(s) | | Publication date |
|---|---|---|---|---|---|
| CN 114203961 | A | 18-03-2022 | NONE | | |
| JP 2006253157 | A | 21-09-2006 | JP 4502332 B2 | | 14-07-2010 |
| | | | JP 2006253157 A | | 21-09-2006 |
| CN 1472839 | A | 04-02-2004 | NONE | | |
| US 2019288330 | A1 | 19-09-2019 | CN 110277553 A | | 24-09-2019 |
| | | | EP 3540827 A1 | | 18-09-2019 |
| | | | US 2019288330 A1 | | 19-09-2019 |

EPO FORM P0459

For more details about this annex : see Official Journal of the European Patent Office, No. 12/82